# EUROPEAN PATENT APPLICATION

(11) **EP 4 769 661 A1**
(43) Date of publication of application: **01.07.2026**
(21) Application number: 25222825.9
(22) Date of filing: 12.12.2025
(51) Int. Cl.: H01M 10/6555, H01M 50/209, H01M 50/213

(54) **BATTERY PACK**

(30) Priority: 27.12.2024 KR 20240198621
(71) Applicant: SAMSUNG SDI CO., LTD., Yongin-si, Gyeonggi-do 17084 (KR)
(72) Inventor: HONG, Seung Joon, 16678 Suwon-si, Gyeonggi-do (KR)
(74) Representative: Gulde & Partner

(57) **Abstract**

The present disclosure a battery pack including a holder that may be universally applied to various types of secondary batteries. The battery pack includes a plurality of secondary batteries, a housing accommodating the plurality of secondary batteries, and a holder disposed within the housing and supports the plurality of secondary batteries, wherein the holder includes one or more short sides extending in a first direction and a plurality of long sides connected to the short sides and extending in a second direction, and wherein the holder defines one or more accommodating spaces where the plurality of secondary batteries are provided through the short sides and the long sides.

## Description

### BACKGROUND

### 1. Field

The present disclosure relates to a battery pack including a holder.

### 2. Description of Related Art

The demand for secondary batteries with relatively high energy density and relatively high capacity is rapidly increasing due to the rapid spread of electronic devices that use batteries, such as portable phones, laptop computers, and electric vehicles. Research and development is actively being conducted to improve the performance of lithium secondary batteries.

A lithium secondary battery is a battery that includes a positive electrode and a negative electrode, each including active materials capable of intercalation and deintercalation of lithium ions, and an electrolyte, and produces electrical energy via oxidation and reduction reactions when lithium ions are intercalated/deintercalated into/from the positive electrode and negative electrode.

The secondary battery may be used in a single form, or in the form of a battery module or battery pack, which is a unit formed by connecting a plurality of secondary batteries.

This Background section is for the general understanding of the background of the present disclosure, and therefore, it may contain information that does not constitute related (or prior) art.

### SUMMARY

The invention is defined by the appended claims. The description that follows is subjected to this limitation. Any disclosure lying outside the scope of said claims is only intended for illustrative as well as comparative purposes.

Embodiments of the present disclosure are directed to a battery pack including a holder that may be universally applied to various types of secondary batteries.

Embodiments of the present disclosure are directed to a battery pack including a holder capable of insulating between secondary batteries.

Embodiments of the present disclosure are directed to a battery pack including a holder capable of thermally insulating between secondary batteries.

Embodiments of the present disclosure provide a battery pack including a plurality of secondary batteries, a housing that accommodates the plurality of secondary batteries, and a holder that is installed inside the housing and supports the plurality of secondary batteries, wherein the holder includes one or more short sides extending in a first direction and a plurality of long sides connected to the short sides and extending in a second direction, and forms one or more accommodating spaces in which the secondary batteries are provided through the short sides and the long sides.

Embodiments of the present disclosure provide a battery pack including: a plurality of secondary batteries; a housing accommodating the plurality of secondary batteries; and a holder disposed within the housing and supports the plurality of secondary batteries, wherein the holder includes one or more short sides extending in a first direction and a plurality of long sides connected to the short sides and extending in a second direction, and wherein the holder defines one or more accommodating spaces where the plurality of secondary batteries are provided through the short sides and the long sides.

In some embodiments, each of the long sides includes a first long side, a second long side, and a third long side, all of which are spaced apart from each other or one another and disposed adjacent to each other or one another, and wherein the accommodating space includes a first accommodating space including the first long side and the second long side and a second accommodating space which is disposed adjacent to the first accommodating space and includes the second long side and the third long side.

In some embodiments, the short sides include a first short side and a second short side, wherein the first accommodating space includes the first short side that is located on one side of the holder, and wherein the second accommodating space includes the second short side that is located on the other side of the holder.

In some embodiments, the short sides extend in the first direction and define portions of the first accommodating space and the second accommodating space.

In some embodiments, the secondary battery includes an electrode assembly and a case accommodating the electrode assembly, and wherein a height of the accommodating space is equal to or greater than a height of the case.

In some embodiments, the secondary battery includes an electrode assembly and a cylindrical case accommodating the electrode assembly, and wherein a length of the accommodating space is equal to or greater than a diameter of the cylindrical case.

In some embodiments, the secondary battery includes an electrode assembly and a prismatic case accommodating the electrode assembly, and wherein a length of the accommodating space is equal to or greater than a length of one side surface of the prismatic case.

In some embodiments, the short sides include a first short side and a second short side, wherein the first accommodating space includes the first short side that is located on one side of the holder, and wherein the second accommodating space includes the second short side that is located on the other side of the holder.

In some embodiments, the short sides extend in the first direction and define portions of the first accommodating space and the second accommodating space.

In some embodiments, the secondary battery includes an electrode assembly and a case accommodating the electrode assembly, and wherein a height of the accommodating space is equal to or greater than a height of the case.

In some embodiments, the secondary battery includes an electrode assembly and a cylindrical case accommodating the electrode assembly, and wherein a length of the accommodating space is equal to or greater than a diameter of the cylindrical case.

In some embodiments, the secondary battery includes an electrode assembly and a prismatic case accommodating the electrode assembly, and wherein a length of the accommodating space is equal to or greater than a length of one side surface of the prismatic case.

In some embodiments, one or more of the plurality of secondary batteries are provided in the accommodating space.

In some embodiments, the holder includes one or more unit holders that define one accommodating space, and the unit holder is defined by one short side and two long sides respectively connected to one side and an other side of the short side.

In some embodiments, the holder is formed by coupling a plurality of the unit holders.

In some embodiments, the holder includes a plurality of the unit holders including a first unit holder and a second unit holder located adjacent to each other, and wherein a long side included in the first unit holder is in surface contact with an outer side of a long side included in the second unit holder.

In some embodiments, the holder includes a plurality of the unit holders including a first unit holder and a second unit holder located adjacent to each other, and a long side included in the first unit holder is in surface contact with an inner side of a long side included in the second unit holder
In some embodiments, the holder includes a plate with a plurality of folding lines spaced at predetermined intervals, and wherein the plate is configured to be folded along two or more of the plurality of folding lines to form at least a portion of the holder.

In some embodiments, the predetermined interval corresponds to a length of the accommodating space.

In some embodiments, the holder further includes: a plurality of holes on the long side; and a coupling member coupled to the hole and extending in the first direction.

In some embodiments, the coupling member includes: a catch portion allowing the coupling member to be caught on the hole; and a passing through portion extending from a portion of the catch portion and passes through the hole.

In some embodiments, the hole includes a plurality of holes formed in a vertical direction of the holder, and wherein the coupling member includes: a catch portion extending in the vertical direction of the holder so that the coupling member is caught on the hole; and a plurality of passing through portions extending in the first direction from the catch portion and passing through the plurality of holes.

In some embodiments, wherein the coupling member passes through a space between at least two or more of a plurality of secondary batteries provided in the accommodating space.

In some embodiments, the holder further includes a thermal insulating material, and wherein the thermal insulating material includes mica, kaolin, talc, diatomaceous earth, bentonite, silica, gangue, polyimide, and polyethylene terephthalate, or a mixture thereof.

In some embodiments, the long sides located at the outermost sides of the holder are thicker than the long side located within the holder.

### BRIEF DESCRIPTION OF THE DRAWINGS

The drawings illustrate embodiments of the present disclosure, and further describe aspects and features of the present disclosure along with the detailed description of the present disclosure. Thus, the present disclosure should not be construed as being limited to the drawings:
FIG. 1 is a perspective view schematically illustrating a battery pack according to embodiments of the present disclosure;
FIG. 2 is a perspective view schematically illustrating a battery pack according to embodiments of the present disclosure;
FIG. 3 is a schematic view illustrating a secondary battery according to embodiments of the present disclosure;
FIG. 4 is a schematic view illustrating a secondary battery according to embodiments of the present disclosure;
FIG. 5 is a schematic view illustrating a holder according to embodiments of the present disclosure;
FIG. 6 is a view illustrating secondary batteries being inserted into a holder in one direction according to embodiments of the present disclosure;
FIG. 7 is a view illustrating secondary batteries being inserted into a holder in two directions according to embodiments of the present disclosure;
FIG. 8 is a view illustrating secondary batteries being inserted into a holder in one direction according to embodiments of the present disclosure;
FIG. 9 is a view illustrating secondary batteries being inserted into a holder in two directions according to embodiments of the present disclosure;
FIG. 10 is a view illustrating a unit holder according to embodiments of the present disclosure;
FIG. 11 is a view illustrating unit holders being coupled according to embodiments of the present disclosure;
FIG. 12 is a view illustrating unit holders being coupled according to embodiments of the present disclosure;
FIG. 13 is a view illustrating a holder according to embodiments of the present disclosure;
FIG. 14 is a view illustrating a plate according to embodiments of the present disclosure;
FIG. 15 is a view illustrating a holder formed by the plate described in FIG. 14 according to embodiments of the present disclosure;
FIG. 16 is a view illustrating a plate and a coupling member according to embodiments of the present disclosure;
FIG. 17 is a view illustrating a holder formed by coupling the coupling member and the plate described in FIG. 16 according to embodiments of the present disclosure;
FIG. 18 is a view illustrating a holder formed by coupling the coupling member and the plate described in FIG. 16 according to embodiments of the present disclosure; and
FIG. 19 is a view illustrating a holder according to embodiments of the present disclosure.

### DETAILED DESCRIPTION

Embodiments of the present disclosure are described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

Accordingly, it is to be understood that the embodiments described herein, and the configurations illustrated in the drawings are only some of the most exemplary embodiments of the invention and do not represent all of the technical ideas of the disclosure, and that there may be various equivalents and modifications that may replace them at the time of filing.

Furthermore, when used herein, the terms "comprise or include" and/or "comprising or including" specify the presence of the mentioned shapes, numbers, steps, operations, members, elements, and/or groups thereof and are not intended to exclude the presence or addition of one or more other shapes, numbers, operations, members, elements, and/or groups thereof.

In addition, in order to help understand the invention, the attached drawings are not drawn to actual scale, and the dimensions of some components may be exaggerated. In addition, the same reference numbers may be assigned to the same components in different embodiments.

Also, any numerical range disclosed and/or recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein.

The statement that two objects for comparison are "equal" means "substantially the same". Therefore, substantially the same may include deviations that are considered low in the art, for example, deviations of less than 5%. Additionally, uniformity of a parameter over a given region may mean uniformity from an average perspective.

Although first, second, and the like are used to describe various components, the components are not limited by these terms. These terms are used only to distinguish one component from another, and unless otherwise specifically stated, it is to be understood that a first component may also be a second component.

Throughout the specification, unless otherwise specifically stated, each element may be singular or plural.

When an arbitrary configuration is placed "on (or under)" a component or "above (or below)" a component, it can mean not only that the arbitrary configuration is placed in contact with the top (or bottom) of the component, but also that other configurations can be interposed between the component and the arbitrary configuration placed on (or under) the component.

In addition, when a component is described as being "on," "connected to," or "coupled to" another component, the above components may be directly connected or coupled to each other, but it should be understood that other components may be "interposed" between each component, or each component may be "connected," "coupled," or "linked" through another component.

As used herein, the term "and/or" includes any and all combinations of one or more of the associated listed items. Further, the use of "may" when describing embodiments of the present invention relates to "one or more embodiments of the present invention." Expressions such as "one or more" and "at least one" before the list of elements modify the entire list of elements and do not modify individual elements in the list.

Throughout the specification, "A and/or B" means A, B, or A and B unless otherwise stated to the contrary. That is, "and/or" includes any or all combinations of a plurality of listed items. When "C to D" is stated, it means greater than or equal to C and less than or equal to D unless otherwise specifically stated.

When phrases such as "at least one of A, B, and C," "at least one selected from group of A, B, and C," or "at least one selected from A, B, and C" are used to specify a list of elements A, B, and C, the phrases may refer to any and all suitable combinations.

The term "use" may be considered synonymous with the term "utilize." As used in the present specification, the terms "substantially," "about," and other similar terms are used as terms of approximation rather than terms of degree, and are intended to consider an inherent variation in measured or calculated values recognized by those skilled in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be named a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the drawings. It will be understood that the spatially relative terms are intended to encompass different orientations of the device in use or operation in addition to the orientation depicted in the drawings. For example, when the elements or features in the drawings are inverted, an element described as "lower" or "below" "becomes "upper" or "above."

The terms used in the present disclosure are intended to describe the embodiments of the present disclosure, and are not intended to limit the present disclosure.

In the present disclosure, an X-axis represents a longitudinal direction of a battery pack 1000. In the present disclosure, a Y-axis represents a lateral direction of the battery pack 1000. In the present disclosure, a Z-axis represents a vertical direction of the battery pack 1000. The X-axis, Y-axis, and Z-axis are each perpendicular to one another.

As used herein, "identical" means identical or within a margin of error. For example, the margin of error is ±5% or less.

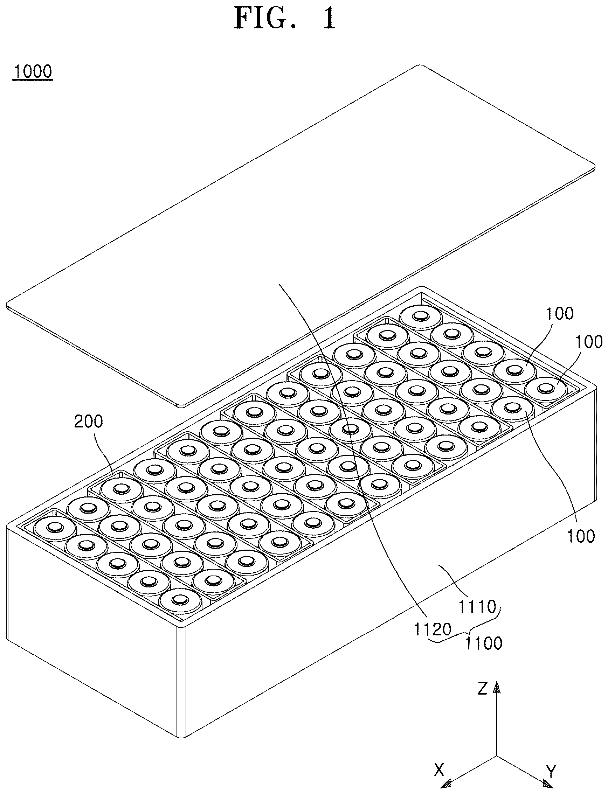

FIG. 1 is a perspective view schematically illustrating a configuration of a battery pack.

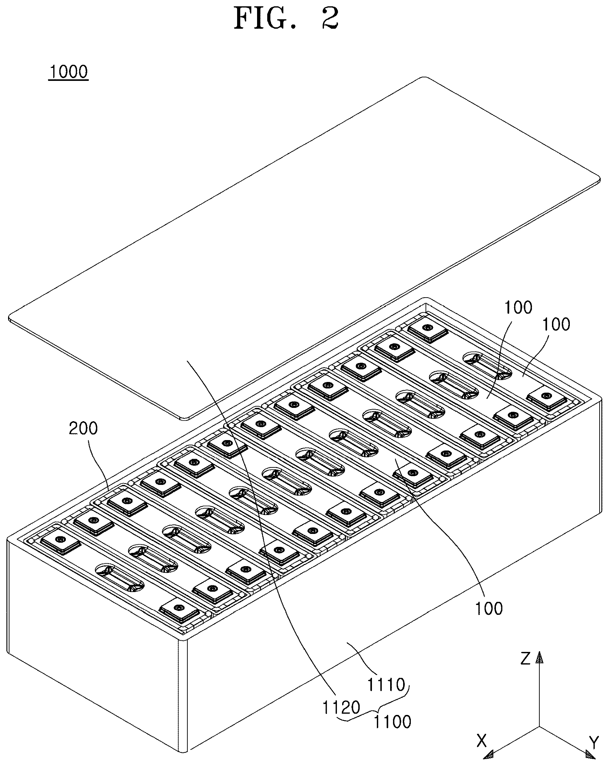

FIG. 2 is a perspective view schematically illustrating a configuration of a battery pack.

FIGS. 1 and 2 illustrate a battery pack 1000 including a secondary battery 100. For example, the battery pack 1000 includes a cylindrical secondary battery 100. For example, the battery pack 1000 includes a prismatic secondary battery 100. The type of secondary battery 100 included in the battery pack 1000 is not limited thereto.

The battery pack 1000 includes a plurality of secondary batteries 100, a housing 1100 that accommodates the plurality of secondary batteries 100, and a holder that is installed inside the housing 1100 and supports the plurality of secondary batteries 100.

The housing 1100 may define an approximate exterior of the battery pack 1000 and provide a space in which the secondary battery 100 may be accommodated.

The housing 1100 may include a housing body 1110 and a cover 1120.

The housing body 1110 may have a box geometry with a hollow interior and one open side. A cross-sectional geometry of the housing body 1110 is not limited to the rectangular geometry illustrated in FIGS. 1 and 2, and may be designed to have various geometries such as a polygonal geometry, a circular geometry, an oval geometry, and the like.

The cover 1120 may be coupled to the housing body 1110 and close the interior space of the housing body 1110. For example, the cover 1120 may have a roughly plate geometry and may be disposed to face the open side of the housing body 1110. The cover 1120 may be fixed to the housing body 1110 by various types of coupling methods such as bolting, welding, and fitting.

The secondary battery 100 may function as a unit structure for storing and supplying power in the battery pack 1000.

The present disclosure provides the secondary battery 100 as a lithium-ion secondary battery. However, the present disclosure is not limited thereto, and for example, the secondary battery 100 may be a lithium polymer battery.

A plurality of secondary batteries 100 may be provided. The plurality of secondary batteries 100 may be disposed to form various patterns such as a grid geometry or a zigzag geometry in the housing 1100. The plurality of secondary batteries 100 may be arranged parallel to each other or one another. The number of secondary batteries 100 may be designed in various ways depending on the size or geometry of the housing 1100.

The holder 200 supports the plurality of secondary batteries 100. For example, the holder 200 may be located between the plurality of secondary batteries 100 while passing through a space between at least some of the plurality of secondary batteries 100. The holder 200 fixes the plurality of secondary batteries 100.

The plurality of secondary batteries 100 that are supported and/or fixed by the holder 200 may be accommodated in the housing 1100 and assembled into the battery pack 1000.

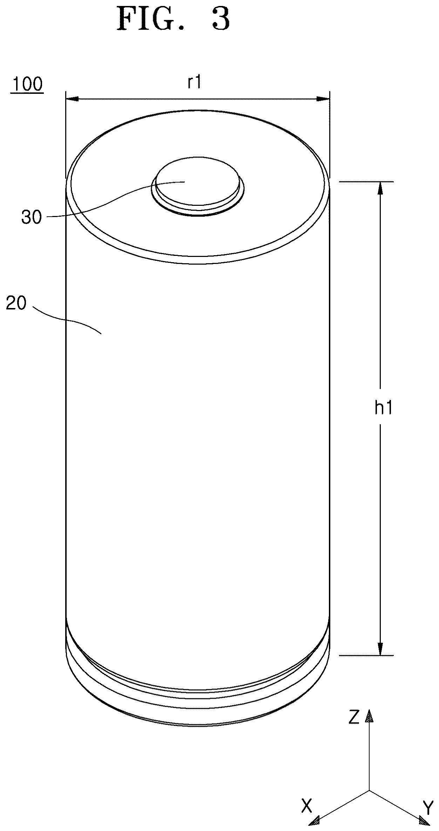

FIG. 3 is a schematic view illustrating a secondary battery.

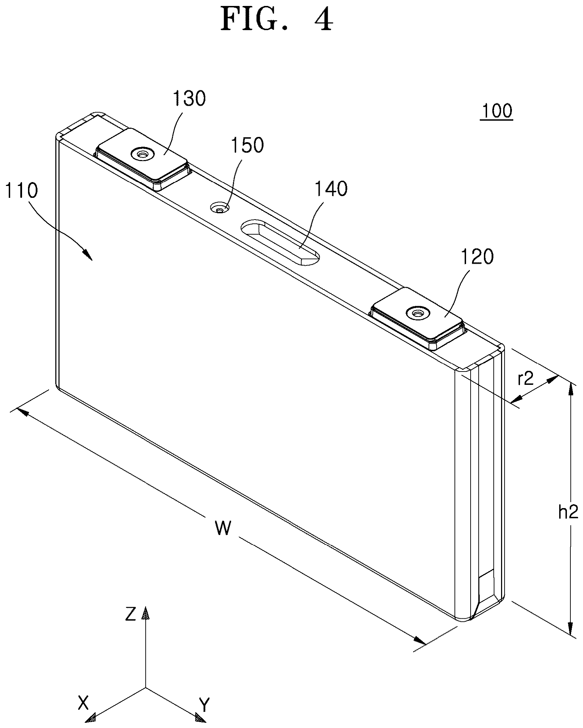

FIG. 4 is a schematic view illustrating a secondary battery.

A battery pack 1000 (including, for example, the battery pack 1000 described in FIGS. 1 and 2) includes a secondary battery 100 (including, for example, the secondary battery 100 described in FIGS. 1 and 2), a housing 1100 (including, for example, the housing 1100 described in FIGS. 1 and 2), and a holder 200 (including, for example, the holder 200 described in FIGS. 1 and 2).

The secondary battery 100 includes an electrode assembly and a case that accommodates the electrode assembly.

The electrode assembly may function as a unit structure which performs charging and discharging operations of power in the secondary battery 100.

The electrode assembly includes a first electrode and a second electrode. The first electrode is a positive electrode or a negative electrode. The second electrode is a negative electrode or a positive electrode and has a different polarity from the first electrode. The present disclosure provides an example embodiment where the first electrode is a positive electrode and the second electrode is a negative electrode; however, the first electrode can be a negative electrode and the second electrode can be a positive electrode.

The electrode assembly may include a separator between the first electrode and the second electrode. The separator may prevent the first electrode and the second electrode from coming into contact with each other, and may prevent a short circuit from occurring between the first electrode and the second electrode. The electrode assembly may be formed by stacking the first electrode, the second electrode, and the separator provided between the first electrode and the second electrode.

For example, when the electrode assembly forms a cylindrical geometry, a stacked structure including the first electrode, the second electrode, and the separator may be wound to form a jellyroll geometry. For example, the electrode assembly may have a geometry that is wound clockwise or counterclockwise around a winding axis. A cross-sectional geometry of the electrode assembly may have various geometries such as an oval geometry or a polygonal geometry in addition to the circular geometry. The winding axis may refer to a straight line passing through the center of the electrode assembly.

For example, the electrode assembly may be formed by stacking a plurality of first electrodes, a plurality of second electrodes, and one or more separators.

### Positive electrode active material

As the positive electrode active material, a compound capable of reversible intercalation and deintercalation of lithium (lithiated intercalation compound) may be used. Specifically, at least one of composite oxides of lithium and a metal selected from cobalt, manganese, nickel, and a combination thereof may be used.

The composite oxide may be a lithium transition metal composite oxide, and specific examples thereof may include lithium nickel-based oxides, lithium cobalt-based oxides, lithium manganese-based oxides, lithium iron phosphate-based compounds, cobalt-free lithium nickel-manganese-based oxides, or a combination thereof.

For example, a compound represented as any one of chemical formulas below may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above chemical formulas, A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L1 is Mn, Al, or a combination thereof.

For example, the positive electrode active material may include a high nickel-based positive electrode active material with a nickel content of 80 mol% or more, 85 mol% or more, 90 mol% or more, 91 mol% or more, or 94 mol% or more and 99 mol% or less based on 100 mol% of metals excluding lithium in the lithium transition metal composite oxide. The high nickel-based positive electrode active material can realize relatively high capacity and thus may be applied to relatively high capacity, relatively high density lithium batteries.

### Positive electrode

The positive electrode for the secondary battery 100 may include a current collector and a positive electrode active material layer formed on the current collector. The positive electrode active material layer may further include a positive electrode active material, and may include a binder and/or a conductive material.

For example, the positive electrode may include an additive that may serve as a sacrificial positive electrode.

The content of the positive electrode active material may be 90 wt% to 99.5 wt% based on 100 wt% of the positive electrode active material layer, and the content of each of the binder and the conductive material may be 0.5 wt% to 5 wt% based on 100 wt% of the positive electrode active material layer.

The binder attaches particles constituting the positive electrode active material to one another and attaches the positive electrode active material to the current collector. Non-limiting examples of the binder may include polyvinyl alcohol, carboxymethylcellulose, hydroxypropyl cellulose, diacetylcellulose, polyvinyl chloride, carboxylated polyvinyl chloride, polyvinyl fluoride, polymers containing ethylene oxide, polyvinylpyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, polyester resin, or nylon, but are not limited thereto.

The conductive material is used to provide conductivity to the electrode, and any material which does not cause a detrimental chemical change and is electronically conductive may be used. Non-limiting examples of the conductive material may include a carbon-based material such as natural graphite, artificial graphite, carbon black, acetylene black, Ketjen black, carbon fibers, carbon nanofibers, or carbon nanotubes; a metal-based material in the form of a metal powder or metal fibers containing copper, nickel, aluminum, or silver; a conductive polymer such as a polyphenylene derivative; or a mixture thereof.

Al may be used as the current collector, but the present invention is not limited thereto.

### Negative electrode active material

The negative electrode active material may include a material capable of reversibly intercalating and deintercalating lithium ions, lithium metal, an alloy of lithium and a metal, a material capable of doping and dedoping lithium, or a transition metal oxide.

The material capable of reversibly intercalating/deintercalating lithium ions may include a carbon-based negative electrode active material, for example, crystalline carbon, amorphous carbon, or a combination thereof. Non-limiting examples of the crystalline carbon may include graphite such as amorphous, plate-shaped, flaky, spherical, or fibrous natural graphite or artificial graphite, and non-limiting examples of the amorphous carbon may include soft carbon or hard carbon, mesophase pitch carbide, or calcined coke.

An alloy of lithium may include a metal including Na, K, Rb, Cs, Fr, Be, Mg, Ca, Sr, Si, Sb, Pb, In, Zn, Ba, Ra, Ge, Al, or Sn.

A Si-based negative electrode active material or Sn-based negative electrode active material may be used as the material capable of doping and dedoping lithium. The Si-based negative electrode active material may include silicon, a silicon-carbon composite, SiOₓ (0 < x < 2), an Si-Q alloy (Q is selected from an alkali metal, an alkaline earth metal, a Group 13 element, a Group 14 element (excluding Si), a Group 15 element, a Group 16 element, a transition metal, a rare earth element, and a combination thereof), or a combination thereof. The Sn-based negative electrode active material may be Sn, SnO₂, a Sn-based alloy, or a combination thereof.

The silicon-carbon composite may include a composite of silicon and amorphous carbon. According to an embodiment, the silicon-carbon composite may be in the form of silicon particles whose surfaces are coated with amorphous carbon. For example, the silicon-carbon composite may include a secondary particle (a core) in which silicon primary particles are assembled and an amorphous carbon coating layer (a shell) located on the surface of the secondary particle. The amorphous carbon may also be located between the silicon primary particles, and for example, the silicon primary particles may be coated with the amorphous carbon. The secondary particle may be dispersed in an amorphous carbon matrix.

The silicon-carbon composite may include crystalline carbon. For example, the silicon-carbon composite may include a core including crystalline carbon and silicon particles and an amorphous carbon coating layer located on a surface of the core.

The Si-based negative electrode active material or Sn-based negative electrode active material may be used in combination with the carbon-based negative electrode active material.

### Negative electrode

The negative electrode for the secondary battery 100 may include a current collector and a negative electrode active material layer located on the current collector. The negative electrode active material layer may include a negative electrode active material and may further include a binder and/or a conductive material.

For example, the negative electrode active material layer may include 90 to 99 wt% of the negative electrode active material, 0.5 to 5 wt% of the binder, and 0 to 5 wt% of the conductive material.

The binder attaches particles constituting the negative electrode active material to one another, and attaches the negative electrode active material to the current collector. The binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include styrene-butadiene rubber, (meth)acrylated styrene-butadiene rubber, (meth)acrylonitrile-butadiene rubber, (meth)acrylic rubber, butyl rubber, a fluoroelastomer, polyethylene oxide, polyvinylpyrrolidone, polyepichlorohydrin, polyphosphazene, poly(metha)acrylonitrile, an ethylene propylene diene copolymer, polyvinylpyridine, chlorosulfonated polyethylene, latex, polyester resin, (metha)acrylic resin, phenolic resin, epoxy resin, polyvinyl alcohol, or a combination thereof.

When the aqueous binder is used as the negative electrode binder, a cellulose-based compound capable of imparting viscosity may be included. This cellulose-based compound may be used by mixing one or more of carboxymethyl cellulose, hydroxypropyl methyl cellulose, methyl cellulose, and alkali metal salts thereof. Na, K, or Li may be used as the alkali metal.

The dry binder is a polymer material capable of being fiberized and may be, for example, polytetrafluoroethylene, polyvinylidene fluoride, a vinylidene fluoride-hexafluoropropylene copolymer, polyethylene oxide, or a combination thereof.

The conductive material is used to provide conductivity to the electrode, and any material which does not cause a detrimental chemical change and is electronically conductive may be used. Non-limiting examples may include a carbon-based material such as natural graphite, artificial graphite, carbon black, acetylene black, Ketjen black, carbon fibers, carbon nanofibers, or carbon nanotubes; a metal-based material in the form of a metal powder or metal fibers containing copper, nickel, aluminum, or silver; a conductive polymer such as a polyphenylene derivative; or a mixture thereof.

The negative electrode current collector may include copper foil, nickel foil, stainless steel foil, titanium foil, nickel foam, copper foam, a polymer substrate coated with a conductive metal, or a combination thereof.

### Separator

Depending on the type of secondary battery 100, a separator may be present between the positive electrode and the negative electrode. As the separator, polyethylene, polypropylene, polyvinylidene fluoride, or a multilayer film of two or more layers thereof may be used, for example, a mixed multilayer film such as a polyethylene/polypropylene two-layer separator, a polyethylene/polypropylene/polyethylene three-layer separator, or a polypropylene/polyethylene/polypropylene three-layer separator may be used.

The separator may include a porous substrate and a coating layer containing an organic material, an inorganic material, or a combination thereof located on one or both sides of the porous substrate.

The porous substrate may include a polymer film including polyolefins such as polyethylene and polypropylene, polyesters such as polyethylene terephthalate and polybutylene terephthalate, polyacetal, polyamide, polyimide, polycarbonate, polyether ketone, polyarylether ketone, polyetherimide, polyamideimide, polybenzimidazole, polyether sulfone, polyphenylene oxide, a cyclic olefin copolymer, polyphenylene sulfide, polyethylene naphthalate, glass fiber, Teflon, and polytetrafluoroethylene (e.g., Teflon^{®}), or a copolymer or mixture of two or more thereof.

The organic material may include a polyvinylidene fluoride-based polymer or a (meth) acryl-based polymer.

The inorganic material may include inorganic particles including Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, or a combination thereof, but is not limited thereto.

The organic material and the inorganic material may be present as a mixture in a single coating layer or may be present in a form in which a coating layer including an organic material and a coating layer including an inorganic material are stacked.

### Electrolyte

The electrolyte for the secondary battery 100 includes a non-aqueous organic solvent and a lithium salt.

The non-aqueous organic solvent acts as a medium through which ions involved in the electrochemical reaction of the battery can migrate.

The non-aqueous organic solvent may include a carbonate-based solvent, an ester-based solvent, an ether-based solvent, a ketone-based solvent, an alcohol-based solvent, an aprotic solvent, or a combination thereof.

Non-limiting examples of the carbonate-based solvents may include dimethyl carbonate (DMC), diethyl carbonate (DEC), dipropyl carbonate (DPC), methyl propyl carbonate (MPC), ethyl propyl carbonate (EPC), methyl ethyl carbonate (MEC), ethylene carbonate (EC), propylene carbonate (PC), or butylene carbonate (BC).

The ester-based solvent may include methyl acetate, ethyl acetate, n-propyl acetate, dimethyl acetate, methyl propionate, ethyl propionate, decanolide, mevalonolactone, valerolactone, or caprolactone.

Non-limiting examples of the ether-based solvent may include dibutyl ether, tetraglyme, diglyme, dimethoxyethane, 2-methyltetrahydrofuran, 2,5-dimethyltetrahydrofuran, or tetrahydrofuran. In addition, cyclohexanone and the like may be used as the ketone-based solvent. As the alcohol-based solvent, ethyl alcohol or isopropyl alcohol may be used, and as the aprotic solvent, a nitrile such as R-CN (R is a straight, branched, or ring-shaped hydrocarbon group having 2 to 20 carbon atoms, and may include a double bond, an aromatic ring, or an ether group), an amide such as dimethylformamide, a dioxolane such as 1,3-dioxolane or 1,4-dioxolane, or a sulfolane may be used.

The non-aqueous organic solvent may be used alone or in a mixture of two or more.

When using the carbonate-based solvent, a cyclic carbonate and a chain carbonate may be mixed and used, and the cyclic carbonate and the chain carbonate may be mixed in a volume ratio of 1:1 to 1:9.

The lithium salt is a substance that is dissolved in the organic solvent and acts as a source of lithium ions within the battery, enabling the basic operation of the lithium battery and promoting the movement of lithium ions between the positive electrode and the negative electrode. Non-limiting examples of the lithium salt may include LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N (lithium bis(fluorosulfonyl)imide (LiFSI), LiC₄F₉SO₃, LiN(CₓF₂ₓ₊₁SO₂)(C_{y}F_{2y+1}SO₂) (x and y are integers from 1 to 20), lithium trifluoromethane sulfonate, lithium tetrafluoroethanesulfonate, lithium difluorobis(oxalato)phosphate (LiDFBOP), lithium difluoro(oxalate)borate (LiDFOB), or lithium bis(oxalato)borate (LiBOB).

A case 20 is sealed after accommodating the electrode assembly and the electrolyte. The case 20 defines an approximate exterior of the secondary battery 100.

For example, the case may be formed in the cylindrical geometry as illustrated in FIG. 3. The secondary battery 100 may be formed in the geometry of a cylindrical secondary battery.

For example, the case 20 includes an upper surface forming a cylindrical upper portion, and a side surface connected to an outer circumference of the upper surface and extending perpendicularly from the upper surface to form a side portion.

The case 20 may have a cylindrical lower portion that is open. The case 20 may seal an interior by having the opening sealed by a cap plate. The case 20 may prevent the electrolyte from leaking to the outside and protect the electrode assembly.

The case 20 may be made of, for example, steel, stainless steel, aluminum, an aluminum alloy, a combination thereof, or an equivalent thereof.

For example, the case 20 is electrically connected to an electrode assembly accommodated inside the case 20. For example, the case is electrically connected to a second electrode. The second electrode may be, for example, a negative electrode. For example, the case 20 may serve as a negative electrode terminal.

The secondary battery 100 may include a rivet 30 formed by passing through one side of the case 20. The rivet 30 is electrically connected to the electrode assembly accommodated inside the case 20. For example, the rivet 30 is electrically connected to a first electrode. The first electrode may be, for example, a positive electrode. For example, the rivet 30 may serve as a positive electrode terminal.

For example, as illustrated in FIG. 4, the case may be formed in a prismatic geometry. The secondary battery 100 may be formed in the geometry of a prismatic secondary battery.

For example, a case 110 may include a bottom portion and side portions.

The bottom portion may form a lower exterior of the case 110. The bottom portion may exist in the form of a rectangular plate. The bottom portion may be seated on a bottom surface of the housing 1100.

The side portions may define an exterior of an outer surface of the case 110. The side portions may have a plate extending upward from an edge of the bottom portion. The side portions may be disposed to surround an upper space of the bottom portion.

The case 110 may include an opening. The opening may refer to a space surrounded by an upper end portion of the side portions. The opening may interconnect the space inside and outside the case 110.

The case 110 may have the geometry of a rectangular parallelepiped with an open upper side.

A cap assembly may include a cap plate 160, a first terminal 120, and a second terminal 130.

The cap plate 160 defines an approximate exterior of the cap assembly and may entirely support the first terminal 120 and the second terminal 130.

The cap plate 160 may have a flat plate geometry. The cap plate 160 may be disposed in the opening of the case 110. The cap plate 160 may be coupled to the case 110 by various types of coupling methods such as welding, bolting, and fitting.

The first terminal 120 may protrude outward from the cap plate 160. The first terminal 120 may be electrically connected to the first electrode. As the first electrode functions as a positive electrode, the first terminal 120 may be a positive electrode terminal of the secondary battery 100.

The first terminal 120 may be inserted into the inside of the cap plate 160. The first terminal 120 is illustrated as having a rectangular cross-sectional geometry as an example embodiment, but the cross-sectional shape of the first terminal 120 is not limited thereto, and may have various geometries such as a circular geometry, an oval geometry, or a polygonal geometry. The first terminal 120 may include an electrically conductive material such as aluminum, nickel, or copper.

The second terminal 130 may protrude outward from the cap plate 160 at a position spaced apart from the first terminal 120. The second terminal 130 may be electrically connected to the second electrode. As the second electrode functions as a negative electrode, the second terminal 130 may be a negative electrode terminal of the secondary battery 100.

The second terminal 130 may be inserted into the inside of the cap plate 160. An upper end portion of the second terminal 130 may protrude from the cap plate 160 in a vertical direction (e.g., Z-axis). The second terminal 130 is illustrated as having a rectangular cross-sectional geometry as an example embodiment, but the cross-sectional shape of the second terminal 130 is not limited thereto, and may have various geometries such as a circular geometry, an oval geometry, or a polygonal geometry. The second terminal 130 may be formed of an electrically conductive material such as aluminum, nickel, or copper. The second terminal 130 may be disposed at a position spaced a predetermined distance from the first terminal 120 in a second direction (e.g., Y-axis).

The cap assembly may include a vent hole 140 connected to a vent.

The vent hole 140 may provide a path for flames, gas, or smoke formed within the case 110 to be discharged to the external environment when thermal runaway of the secondary battery 100 occurs due to, e.g., overcurrent. The vent hole 140 may be disposed between the first terminal 120 and the second terminal 130. A cross-sectional shape of the vent hole 140 may have various geometries such as an oval geometry, a circular geometry, or a polygonal geometry.

The cap assembly may include an electrolyte inlet 150 formed to pass through the cap plate 160 and into which a sealing plug may be installed. The electrolyte inlet 150 may be disposed between the first terminal 120 and the second terminal 130.

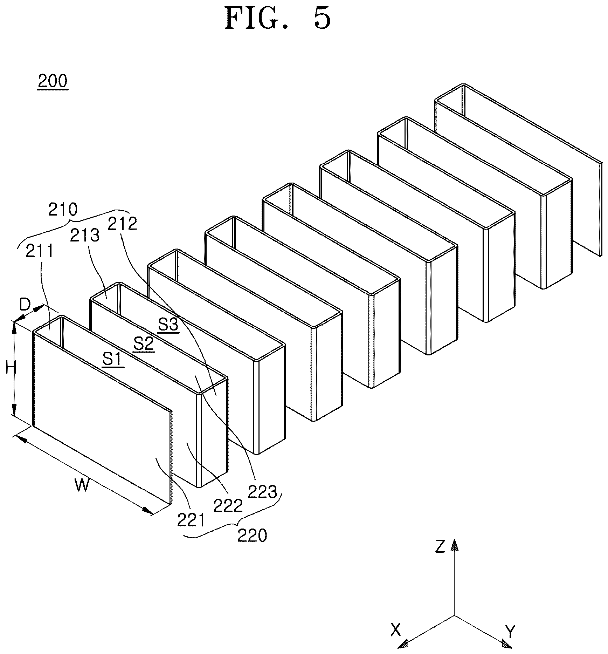

FIG. 5 is a schematic view illustrating a holder.

A battery pack 1000 (including, for example, the battery pack 1000 described in FIGS. 1 to 4) includes a secondary battery 100 (including, for example, the secondary battery 100 described in FIGS. 1 to 4), and a holder 200 (including, for example, the holder 200 described in FIGS. 1 to 4).

The holder 200 includes one or more short sides 210 extending in the first direction and a plurality of long sides 220 connected to the short sides 210 and extending in the second direction, and forms one or more accommodating spaces (e.g., S1, S2, and S3) in which the secondary battery 100 is provided through the short sides 210 and the long sides 220.

The holder 200 simultaneously supports the plurality of secondary batteries 100. For example, the holder 200 may connect the plurality of secondary batteries 100 supported by the holder 200. The plurality of secondary batteries 100 connected by the holder 200 may be assembled into the housing 1100 to form the battery pack 1000.

The holder 200 passes through a space between at least some of the plurality of secondary batteries 100. For example, the holder 200 may pass through a space between all of the plurality of secondary batteries 100. In this manner, the plurality of secondary batteries 100 may each be accommodated in the housing 1100 while being partitioned by holder 200. For example, the holder 200 may pass through a space between some of the plurality of secondary batteries 100. In this manner, some of the plurality of secondary batteries 100 may be accommodated in the housing 1100 while being partitioned by the holder 200.

Conventionally, the battery pack 1000 includes a thermal insulation sheet to prevent heat transfer between the secondary batteries 100 in the event of thermal runaway in one secondary battery 100. The thermal insulation sheet is typically located between the plurality of secondary batteries 100.

Advantageously, the holder 200 may support the secondary battery 100 while simultaneously serving as a thermal insulation sheet. The battery pack 1000 may prevent heat propagation between the secondary batteries 100 and prevent a fire from occurring in the battery pack 1000 even without a separate thermal insulation sheet.

For example, the holder 200 includes a first thermal insulating material. The holder 200 may include only the first thermal insulating material. In this manner the holder 200 may have one layer including the first thermal insulating material.

The holder 200 may include the first thermal insulating material and other additional materials. In this manner, the other additional materials include any material other than the first thermal insulating material. In this manner, the holder 200 may have one or more layers formed by mixing the first thermal insulating material with the other additional materials. The holder 200 may be formed by laminating one layer including the first thermal insulating material and one layer including the other additional material.

For example, the holder 200 includes the first thermal insulating material and a second thermal insulating material. The holder 200 may be formed by laminating a first layer (not illustrated) including the first thermal insulating material and a second layer (not illustrated) including the second thermal insulating material. The holder 200 may have one or more layers formed by mixing the first thermal insulating material and the second thermal insulating material.

For example, the first thermal insulating material may include mica, kaolin, talc, diatomaceous earth, bentonite, silica, gangue, polyimide, and polyethylene terephthalate, or a mixture thereof.

For example, the second thermal insulating material may include aerogel, wet silica, dry silica, polyurethane, polystyrene, polyethylene, and polyester, or a mixture thereof.

Advantageously, the holder 200 may provide improved thermal insulation between the secondary batteries 100.

The holder 200 may prevent heat propagation between the secondary batteries 100 and improve the safety of the battery pack 1000 even when the battery pack 1000 does not include a separate thermal insulation sheet.

For example, the holder 200 includes an insulating material.

For example, the insulating material may include polyimide (PI), polysulfone, polyurethane (PU), polyamide (PA), nylon 6,6, polycarbonate (PC), polytetrafluoroethylene (PTFE), polymethyl methacrylate (PMMA), polyethylene terephthalate (PET), or combinations thereof.

The holder 200 may prevent a short circuit between the secondary batteries 100. The holder 200 may prevent a short circuit between the secondary battery 100 and components included in the battery pack 1000.

For example, the holder 200 may include at least two of the first thermal insulating material, the second thermal insulating material, and the insulating material. For example, the holder 200 may be formed of one layer including a mixture of at least two of the first thermal insulating material, the second thermal insulating material, and the insulating material. For example, the holder 200 may be formed by laminating a plurality of layers, each of which including at least one of the first thermal insulating material, the second thermal insulating material, and the insulating material.

The holder 200 may support various geometries of the secondary battery 100 regardless of the geometry of the secondary battery 100. For example, the holder 200 may support the cylindrical secondary battery 100 illustrated in FIG. 1. For example, the holder 200 may support the prismatic secondary battery 100 illustrated in FIG. 2.

The holder 200 may be universally applied to various geometries of the secondary battery 100.

The holder 200 includes short sides 210 and long sides 220. For example, the holder 200 includes one or more short sides 210 and a plurality of long sides 220.

The short side 210 extends in the first direction. For example, the first direction may be a longitudinal direction (X-axis) of the battery pack 1000. However, the first direction is not limited to the longitudinal direction (X-axis) of the battery pack 1000. For example, the short side 210 has a rectangular plate geometry extending in the first direction and a vertical direction (Z axis) of the battery pack 1000. However, the geometry of the short side 210 is not limited thereto. For example, the short side 210 may extend generally in the first direction, but may have a slightly curved plate geometry.

The long side 220 extends in the second direction. For example, the second direction may be a lateral direction (Y-axis) of the battery pack 1000. However, the second direction is not limited thereto, and the second direction may be any direction that is different from the first direction. For example, the long side 220 has a rectangular plate geometry extending in the second direction and the vertical direction (Z axis) of the battery pack 1000. The extent to which the long side 220 extends in the vertical direction (Z axis) may be the same as the extent to which the short side 210 extends in the vertical direction (Z axis). However, the geometry of the long side 220 is not limited thereto.

The short side 210 is connected to the long side 220. For example, the short side 210 is connected to an end portion of one side of the long side 220. For example, one short side 210 may be connected to two or more long sides 220.

For example, as illustrated in FIG. 5, the holder 200 may include a first short side 211. For example, the holder 200 may include a first long side 221 and a second long side 222. However, the number and/or arrangement of short sides 210 and/or long sides 220 included in the holder 200 is not limited thereto.

For example, the first short side 211 is connected to the first long side 221 and the second long side 222. For example, the first short side 211 is connected to an end portion of one side of the first long side 221. For example, the first short side 211 is connected to an end portion of one side of the second long side 222.

The first long side 221 and the second long side 222 are spaced apart from each other. For example, the first long side 221 and the second long side 222 may be spaced apart by a width of the first short side 211. The width of the first short side 211 is a length of the first short side 211 in the first direction (X-axis). The end portion of one side of the first long side 221 is connected to an end portion of one side of the first short side 211. The end portion of one side of the second long side 222 is connected to an end portion of the other side of the first short side 211. However, a distance between the first long side 221 and the second long side 222 is not limited thereto.

As the first short side 211 is connected to the first long side 221 and the second long side 222, a first accommodating space S1 may be formed by being surrounded on three sides, i.e., the first short side 211, the first long side 221, and the second long side 222.

The battery pack 1000 includes the accommodating space (e.g., S1, S2, or S3) formed by the short side 210 and the long side 220.

The accommodating space (e.g., S1, S2, or S3) is a space formed by being surrounded on at least three sides by the short side 210 and the long side 220. The accommodating space (e.g., S1, S2, or S3) provides a space for accommodating the secondary battery 100. The secondary battery 100 may be supported by the holder 200 that surrounds at least a portion of the secondary battery 100 by being mounted in the accommodating space (e.g., S1, S2, or S3).

Depending on the geometry of the secondary battery 100, only one secondary battery 100 or a plurality of secondary batteries 100 may be provided in each accommodating space (e.g., S1, S2, or S3).

For example, one secondary battery 100 may be accommodated in one accommodating space (e.g., S1, S2, or S3). For example, one accommodating space (e.g., S1, S2, or S3) may accommodate two or more secondary batteries 100. For example, one accommodating space (e.g., S1, S2, or S3) may accommodate the plurality of secondary batteries 100 arranged in a row.

The accommodating space (e.g., S1, S2, or S3) may correspond to the geometry of the secondary battery 100.

In FIG. 5, D represents a length of the accommodating space (e.g., S1, S2, or S3). In FIG. 5, H represents a height of the accommodating space (e.g., S1, S2, or S3). In FIG. 5, W represents a width of the accommodating space (e.g., S1, S2, or S3).

Lengths D, widths W, and/or heights H of the accommodating spaces (e.g., S1, S2, and S3) correspond to a size of the secondary battery 100. For example, the length D, width W, and/or height H of the accommodating space (e.g., S1, S2, or S3) may be universally applied to the secondary battery 100 of various geometries.

For example, the accommodating space (e.g., S1, S2, or S3) may correspond to the geometry of the secondary battery 100 having the greatest size among various geometries of the secondary battery 100. For example, the various geometries of the secondary battery 100 include the cylindrical secondary battery illustrated in FIG. 3 or the prismatic secondary battery illustrated in FIG. 4.

For example, the length D of the accommodating space (e.g., S1, S2, or S3) may correspond to a length of the secondary battery 100, which has a relatively greater length between the cylindrical secondary battery and the prismatic secondary battery. For example, when a length of the cylindrical secondary battery (e.g., a diameter r1 of the cylindrical secondary battery, see FIG. 3) and a length of the prismatic secondary battery (e.g., a length r2 of the prismatic secondary battery, see FIG. 4) are substantially the same, the length D of the accommodating space (e.g., S1, S2, or S3) may correspond to the length of the cylindrical secondary battery or the prismatic secondary battery. For example, the length D of the accommodating space (e.g., S1, S2, or S3) may be substantially equal to r1 and/or r2. For example, when the length of the cylindrical secondary battery is greater than the length of the prismatic secondary battery, the length D of the accommodating space (e.g., S1, S2, or S3) may be substantially equal to the length r1 of the cylindrical secondary battery.

For example, an interval between the long sides 220 may correspond to the length of the secondary battery 100, which has a relatively greater length between the cylindrical secondary battery and the prismatic secondary battery.

For example, the width W of the accommodating space (e.g., S1, S2, or S3) may correspond to a length of the secondary battery 100, which has a relatively greater width between the cylindrical secondary battery and the prismatic secondary battery.

For example, when a width of the prismatic secondary battery (e.g., a width w of the prismatic secondary battery, see FIG. 4) is greater than the width of the cylindrical secondary battery (e.g., the diameter r1 of the cylindrical secondary battery, see FIG. 3), the width W of the accommodating space (e.g., S1, S2, or S3) may correspond to the width of the prismatic secondary battery.

For example, a width of the long side 220 may correspond to the width of the secondary battery 100, which has a relatively greater width between the cylindrical secondary battery and the prismatic secondary battery. The width of the long side 220 is the shortest distance between one side and the other side of the long side 220 in the lateral direction (Y-axis) of the battery pack 1000.

For example, the height H of the accommodating space (e.g., S1, S2, or S3) may correspond to a height of the secondary battery 100, which has a relatively greater height between the cylindrical secondary battery and the prismatic secondary battery. For example, when a height of the cylindrical secondary battery (e.g., the height h1 of the cylindrical secondary battery, see FIG. 3) is greater than a height of the prismatic secondary battery (e.g., the height h2 of the prismatic secondary battery, see FIG. 4), the height H of the accommodating space (e.g., S1, S2, or S3) may correspond to the height of the cylindrical secondary battery.

For example, a height of the holder 200 may correspond to the height of the secondary battery 100, which has a relatively greater height between the cylindrical secondary battery and the prismatic secondary battery. The height of the holder 200 may be substantially equal to a height of the short side 210 and/or a height of the long side 220.

The accommodating space (e.g., S1, S2, or S3) may accommodate at least one relatively large secondary battery 100, and may accommodate two or more relatively small secondary batteries 100. Accordingly, the accommodating space (e.g., S1, S2, or S3) may accommodate secondary batteries 100 of various geometries and/or sizes.

For example, the battery pack 1000 includes one or more accommodating spaces (e.g., S1, S2, and S3). For example, the battery pack 1000 may include the first accommodating space S1 and the second accommodating space S2.

For example, the long side 220 includes the first long side 221, the second long side 222, and a third long side 223, which are spaced apart from each other or one another and disposed adjacent to each other or one another, and the accommodating space includes the first accommodating space S1 including the first long side 221 and the second long side 222 and the second accommodating space S2, which is disposed adjacent to the first accommodating space S1 and includes the second long side 222 and the third long side 223.

The first accommodating space S1 may be defined by the first short side 211, the first long side 221, and the second long side 222.

Similar to the first accommodating space S1, the second accommodating space S2 may be defined by a second short side 212, the second long side 222, and the third long side 223. The first accommodating space S1 and the second accommodating space S2 may share the second long side 222. The first accommodating space S1 and the second accommodating space S2 may be positioned adjacent to each other.

At least three sides surrounding the accommodating space (e.g., S1, S2, or S3) may be defined by the short side 210 and the long sides 220. For example, among four sides, three sides of the accommodating space (e.g., S1, S2, or S3) may be defined by the short side 210 and the long sides 220. For example, one side of the accommodating space (e.g., S1, S2, or S3) may be open.

A plurality of accommodating spaces (e.g., S1, S2, and S3) may each include openings formed in the same direction. The plurality of accommodating spaces (e.g., S1, S2, and S3) may include at least some openings formed in a different direction.

For example, the short side 210 includes the first short side 211 and the second short side 212, the first accommodating space S1 includes the first short side 211 that is located on one side of the holder 200, and the second accommodating space S2 includes the second short side 212 that is located on the other side of the holder 200.

For example, a plane in which the first short side 211 extends and a plane in which the second short side 212 extends are located opposite to each other. The plane in which the first short side 211 extends and the plane in which the second short side 212 extends are disposed to be spaced apart from each other. An interval between the plane in which the first short side 211 extends and the plane in which the second short side 212 extends is equal to the width W of the accommodating space (including, e.g., S1, S2, or S3).

Adjacent accommodating spaces (e.g., S1 and S2) may be open in different directions.

For example, the openings may be formed alternately on one side and the other side of the holder 200.

For example, the holder 200 includes the first accommodating space S1, the second accommodating space S2 adjacent to the first accommodating space S1, and a third accommodating space S3 adjacent to the second accommodating space S2. The first accommodating space S1 includes the first short side 211. The second accommodating space S2 includes the second short side 212. The third accommodating space S3 includes a third short side 213. In this manner, the first short side 211 and the third short side 213 may be located on one side of the holder 200. A plane in which the first short side 211 extends in the longitudinal direction (X-axis) of the battery pack 1000 and a plane in which the third short side 213 extends in the longitudinal direction (X-axis) of the battery pack 1000 may be substantially equal. The second short side 212 may be located on the other side of the holder 200.

For example, a plurality of short sides 210 may be alternately located on one side and the other side of the holder 200. For example, the holder 200 may be formed in a zigzag geometry as a whole.

Advantageously, the holder 200 may provide a cell-to-cell carrier that is universally applicable to secondary batteries 100 having various form factors. Advantageously, the battery pack 1000 including the holder 200 may reduce assembly time and/or costs and improve safety.

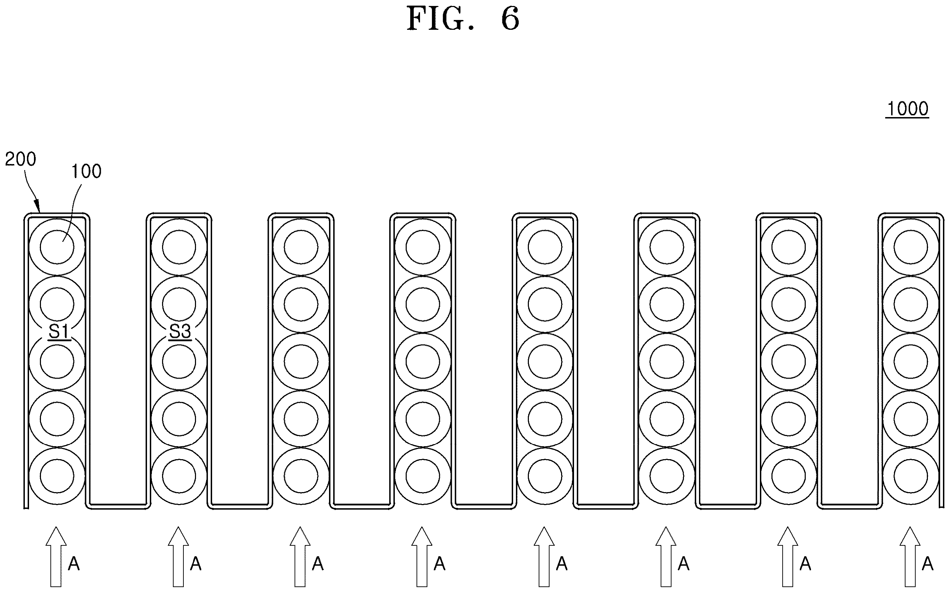

FIG. 6 is a view illustrating secondary batteries being inserted into a holder in one direction.

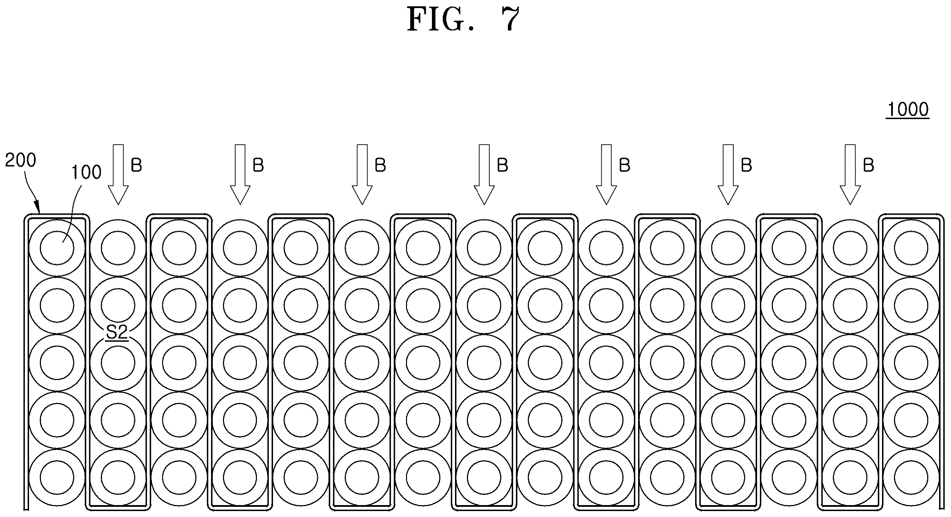

FIG. 7 is a view illustrating secondary batteries being inserted into a holder in two directions.

A battery pack 1000 (including, for example, the battery pack 1000 described in FIGS. 1 to 5) includes a secondary battery 100 (including, for example, the secondary battery 100 described in FIGS. 1 to 5) and a holder 200 (including, for example, the holder 200 described in FIGS. 1 to 5).

FIGS. 6 and 7 are views of the holder 200 from above.

For example, the secondary battery 100 includes an electrode assembly and a cylindrical case 20 that accommodates the electrode assembly. For example, the secondary battery 100 includes the secondary battery described in FIG. 3.

As described in FIGS. 1 to 5, the holder 200 is applicable to various types of the secondary battery 100. Accordingly, the holder 200 may support the cylindrical secondary battery 100.

The length D of the accommodating space (e.g., S1, S2, or S3) may be equal to or greater than the diameter r1 of the cylindrical case 20 (see FIG. 3) or the length r2 (e.g., of one side surface having a relatively less area) of the prismatic case 110 (see FIG. 4). The holder 200 may support the secondary battery 100 provided in the accommodating space (e.g., S1, S2, or S3).

The width W of the accommodating space (e.g., S1, S2, or S3) may be equal to or greater than the sum of the diameters r1 of the plurality of cylindrical cases 20 (see FIG. 3) or the width w of the prismatic case 110 (see FIG. 4). The holder 200 may support the secondary battery 100 provided in the accommodating space (e.g., S1, S2, or S3).

The height H of the accommodating space (e.g., S1, S2, or S3) may be equal to or greater than the height h1 of the cylindrical secondary battery 100 (see FIG. 3) or the height h2 of the prismatic secondary battery 100 (see FIG. 4). The holder 200 may support the secondary battery 100 provided in the accommodating space (e.g., S1, S2, or S3). The holder 200 may prevent a short circuit from occurring between adjacent secondary batteries 100. The holder 200 may prevent thermal runaway from occurring inside the battery pack 1000.

For example, as illustrated in FIGS. 6 and 7, the length D of the accommodating space (e.g., S1, S2, or S3) may be substantially equal to the diameter r1 of the cylindrical secondary battery 100. For example, the width W of the accommodating space (e.g., S1, S2, or S3) may be substantially equal to the sum of the diameters r1 of the plurality of cylindrical secondary batteries 100. For example, the width W of the accommodating space (e.g., S1, S2, or S3) may be substantially equal to 5r1, which is the sum of the diameters r1 of five cylindrical secondary batteries 100. For example, the height H of the accommodating space (e.g., S1, S2, or S3) may be equal to or greater than the height h1 of the cylindrical secondary battery 100.

For example, each accommodating space (e.g., S1, S2, or S3) provides a space in which a plurality of cylindrical secondary batteries 100 may be arranged in a row. For example, each accommodating space (e.g., S1, S2, or S3) provides a space in which the cylindrical secondary batteries 100 may be arranged in 5 rows and 1 column.

For example, the holder 200 includes the plurality of accommodating spaces (e.g., S1, S2, and S3) in which at least some of the openings are formed in a different direction. For example, the holder 200 includes a first accommodating space S1 and a third accommodating space S3, each having an opening formed on one side of the holder 200. The holder 200 includes a second accommodating space S2, which has an opening formed on the other side of the holder 200 and is located between the first accommodating space S1 and the third accommodating space S3.

The holder 200 may be formed in a zigzag geometry.

For example, in the battery pack 1000, the secondary battery 100 may be provided in the accommodating space (e.g., S1 or S3) having an opening formed on one side, and then the secondary battery 100 may be provided in the accommodating space (e.g., S2) having an opening formed on the other side. For example, the secondary battery 100 may be provided in the accommodating space (e.g., S1 or S3) in an A direction as illustrated in FIG. 6, and then the secondary battery 100 may be provided in the accommodating space (e.g., S2) in a B direction as illustrated in FIG. 7.

The holder 200 may be assembled by connecting the secondary battery 100 even when the secondary battery 100 is formed in a cylindrical geometry. Also, the battery pack 1000 may include a plurality of cylindrical secondary batteries 100 supported and/or connected by the holder 200.

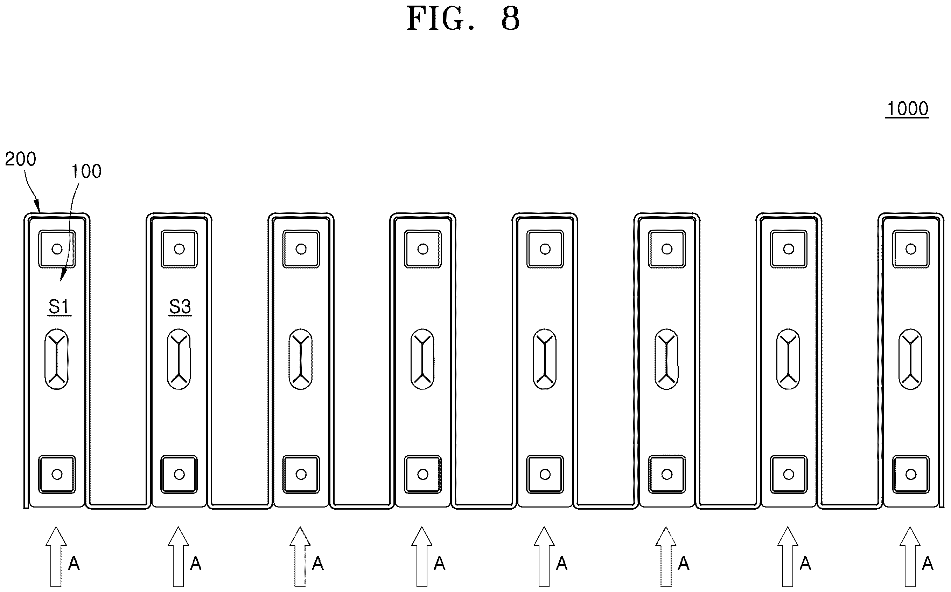

FIG. 8 is a view illustrating secondary batteries being inserted into a holder in one direction.

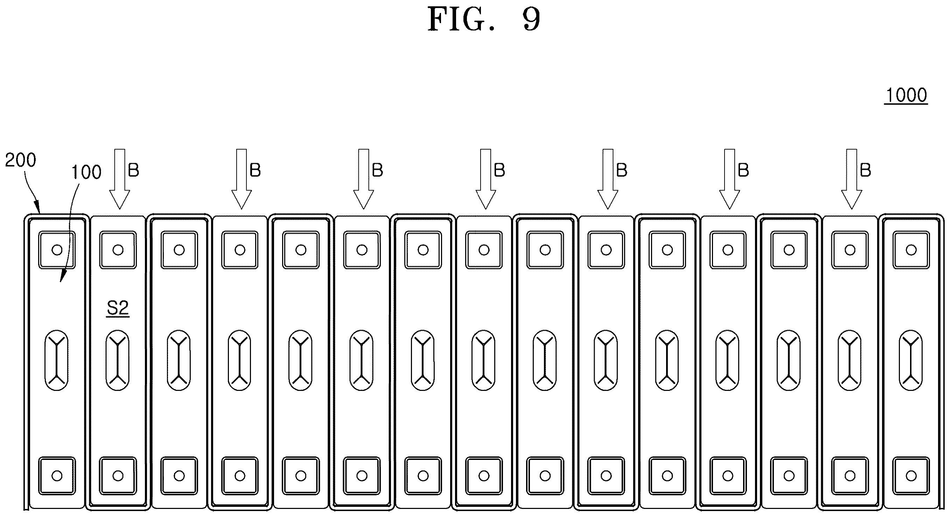

FIG. 9 is a view illustrating secondary batteries being inserted into a holder in two directions.

A battery pack 1000 (including, for example, the battery pack 1000 described in FIGS. 1 to 7) includes a secondary battery 100 (including, for example, the secondary battery 100 described in FIGS. 1 to 7) and a holder 200 (including, for example, the holder 200 described in FIGS. 1 to 7).

FIGS. 8 and 9 are views of the holder 200 from above.

For example, the secondary battery 100 includes an electrode assembly and a prismatic case 110 that accommodates the electrode assembly. For example, the secondary battery 100 includes the secondary battery described in FIG. 4.

As described in FIGS. 1 to 5, the holder 200 is applicable to various types of the secondary battery 100. The holder 200 may support the prismatic secondary battery 100.

The length D of the accommodating space (e.g., S1, S2, or S3) may be equal to or greater than the diameter r1 of the cylindrical case 20 (see FIG. 3) or the length r2 of the prismatic case 110 (see FIG. 4). The holder 200 may support the secondary battery 100 provided in the accommodating space (e.g., S1, S2, or S3).

The width W of the accommodating space (e.g., S1, S2, or S3) may be equal to or greater than the diameter r1 of the cylindrical case 20 or the width w of the prismatic case 110 (see FIG. 4). The holder 200 may support the secondary battery 100 provided in the accommodating space (e.g., S1, S2, or S3).

The height H of the accommodating space (e.g., S1, S2, or S3) may be equal to or greater than the height h1 of the cylindrical secondary battery 100 (see FIG. 3) or the height h2 of the prismatic secondary battery 100 (see FIG. 4). The holder 200 may support the secondary battery 100 provided in the accommodating space (e.g., S1, S2, or S3). The holder 200 may prevent a short circuit from occurring between adjacent secondary batteries 100. The holder 200 may prevent thermal runaway from occurring inside the battery pack 1000.

For example, as illustrated in FIGS. 8 and 9, the length D of the accommodating space (e.g., S1, S2, or S3) may be substantially equal to the length r2 of the prismatic secondary battery 100. For example, the width W of the accommodating space (e.g., S1, S2, or S3) may be substantially equal to the width w of the prismatic secondary battery 100. For example, the height H of the accommodating space (e.g., S1, S2, or S3) may be equal to or greater than the height h2 of the prismatic secondary battery 100.

For example, each accommodating space (e.g., S1, S2, and S3) provides a space in which one prismatic secondary battery 100 may be provided.

For example, the holder 200 includes the plurality of accommodating spaces (e.g., S1, S2, and S3) in which at least some of the openings are formed in different directions. For example, the holder 200 includes a first accommodating space S1 and a third accommodating space S3, each having an opening formed on one side of the holder 200. The holder 200 includes a second accommodating space S2, which has an opening formed on the other side of the holder 200 and is located between the first accommodating space S1 and the third accommodating space S3.

The holder 200 may be formed in a zigzag geometry.

For example, in the battery pack 1000, the secondary battery 100 may be provided in the accommodating space (e.g., S1 or S3) having an opening formed on one side, and the secondary battery 100 may be provided in the accommodating space (e.g., S2) having an opening formed on the other side. For example, the secondary battery 100 may be provided in the accommodating space (e.g., S1 or S3) in an A direction as illustrated in FIG. 8, and the secondary battery 100 may be provided in the accommodating space (e.g., S2) in a B direction as illustrated in FIG. 9.

The holder 200 may be assembled by connecting the secondary battery 100 even when the secondary battery 100 is formed in a prismatic geometry. The battery pack 1000 may include a plurality of prismatic secondary batteries 100 supported and/or connected by the holder 200.

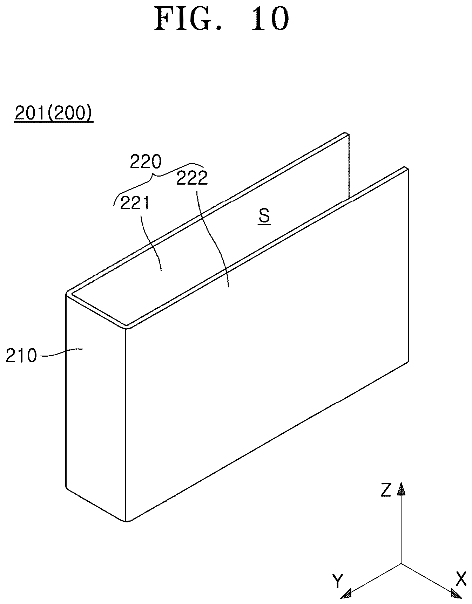

As described in FIGS. 6 to 9, the holder 200 may provide a universally compatible geometry. FIG. 10 is a view illustrating a unit holder.

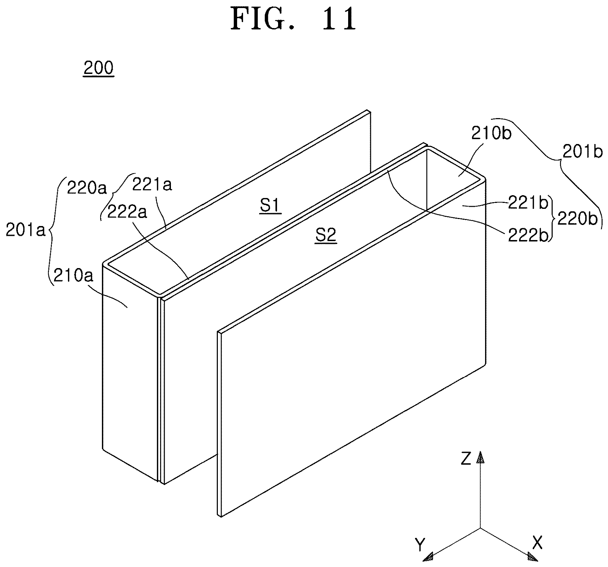

FIG. 11 is a view illustrating unit holders being coupled.

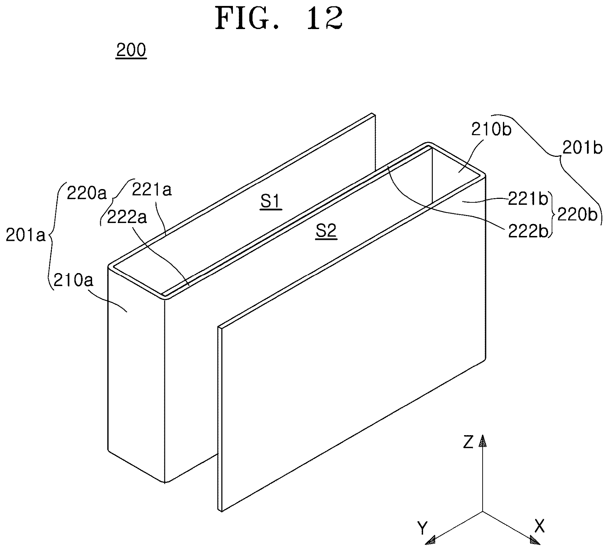

FIG. 12 is a view illustrating unit holders being coupled.

A battery pack 1000 (including, for example, the battery pack 1000 described in FIGS. 1 to 9) includes a secondary battery 100 (including, for example, the secondary battery 100 described in FIGS. 1 to 9) and a holder 200 (including, for example, the holder 200 described in FIGS. 1 to 9).

For example, the holder 200 includes one or more unit holders 201 that form one accommodating space and, the unit holder 201 is formed by one short side 210 and two long sides 220 respectively connected to one side and the other side of the short side 210.

The unit holder 201 includes n accommodating spaces S (e.g., the accommodating spaces (e.g., S1, S2, and S3) described in FIGS. 5 to 9) where n is a natural number equal to or greater than 1. The unit holder 201 includes as many accommodating spaces S as the minimum number of accommodating spaces S provided by the holder 200.

For example, the unit holder 201 includes one accommodating space S. For example, the unit holder 201 may support a plurality of cylindrical secondary batteries 100. For example, the unit holder 201 may support one prismatic secondary battery 100.

However, the description of the unit holder 201 is not limited thereto. For example, the unit holder 201 may include two accommodating spaces.

The unit holder 201 includes one short side 210 and two long sides 220. For example, the unit holder 201 includes a short side 210 extending in the first direction and long sides 220 including a first long side 221 connected to one side of the short side 210 and extending in the second direction and a second long side 222 connected to the other side of the short side 210 and extending in the second direction. For example, the first long side 221 and the second long side 222 may be spaced apart by a length of the short side 210.

The unit holder 201 may be universally applied to battery packs 1000 having various sizes, capacities and/or geometries.

For example, the holder 200 includes a plurality of unit holders 201. For example, the holder 200 may be formed by coupling the plurality of unit holders 201.

For example, the holder 200 includes a plurality of unit holders 201. The plurality of unit holders 201 may be coupled to form the holder 200.

For example, the battery pack 1000 includes 32 prismatic secondary batteries 100 arranged in a single row. The battery pack 1000 includes 32 unit holders 201 arranged in a single row, and may support the plurality of secondary batteries 100 through the plurality of unit holders 201. For example, the battery pack 1000 includes 64 prismatic secondary batteries 100 arranged in two rows. The battery pack 1000 includes 64 unit holders 201 arranged in two rows, and may support the plurality of secondary batteries 100 through the plurality of unit holders 201.

The unit holder 201 enables the holder 200 to have universal applicability for the battery pack 1000. The unit holder 201 may prevent a manufacturing line of the holder 200 from being changed according to the specifications of the battery pack 1000, and reduce the manufacturing and/or assembly costs of the battery pack 1000.

For example, as illustrated in FIGS. 11 and 12, the holder 200 includes a plurality of unit holders 201 including a first unit holder 201a and a second unit holder 201b located adjacent to each other.

The first unit holder 201a includes a first short side 210a extending in the first direction, a first long side 221a connected to one side of the first short side 210a and extending in the second direction, and a second long side 222a connected to the other side of the first short side 210a and extending in the second direction. The first unit holder 201a includes a first accommodating space S1 formed by the first short side 210a, the first long side 221a, and the second long side 222a.

The second unit holder 201b includes a second short side 210b extending in the first direction, a first long side 221b connected to one side of the second short side 210b and extending in the second direction, and a second long side 222b connected to the other side of the second short side 210b and extending in the second direction. The second unit holder 201b includes a second accommodating space S2 formed by the second short side 210b, the first long side 221b, and the second long side 222b.

The first accommodating space S1 and the second accommodating space S2 may be adjacent to each other via the coupling of the first unit holder 201a and the second unit holder 202b.

For example, as illustrated in FIG. 11, an outer surface of the second long side 222a included in the first unit holder 201a is in surface contact with an outer surface of the second long side 222b included in the second unit holder 201b. The plurality of unit holders 201a and 202b form a holder 200 including two or more accommodating spaces S1 and S2.

For example, unlike as illustrated in FIG. 11, the outer surface of the second long side 222a included in the first unit holder 201a may be in surface contact with an outer surface of the first long side 221b included in the second unit holder 201b. The plurality of unit holders 201a and 202b form a holder 200 including two or more accommodating spaces S1 and S2.

The plurality of unit holders 201a and 201b may be coupled as the long sides 220a and 220b are in contact with each other via their outer surfaces.

For example, as illustrated in FIG. 12, the holder 200 includes a plurality of unit holders 201 including a first unit holder 201a and a second unit holder 201b located adjacent to each other, and the long side included in the first unit holder 201a is in surface contact with an inner side of the long side included in the second unit holder 201b.

For example, as illustrated in FIG. 12, an inner surface of the second long side 222a included in the first unit holder 201a is in surface contact with an inner surface of the second long side 222b included in the second unit holder 201b. The plurality of unit holders 201a and 202b form a holder 200 including two or more accommodating spaces S1 and S2.

The lengths D of the accommodating spaces S1 and S2 may be set in consideration of a thickness of the unit holder 201.

The plurality of unit holders 201a and 201b may provide improved coupling force between the unit holders 201 as the long sides 220a and 220b are in contact with each other through their inner surfaces.

Although not illustrated, the holder 200 may include a fixing member for fixing the plurality of coupled unit holders 201. For example, the fixing member may couple the plurality of unit holders 201 via various types of coupling methods such as bolting, welding, fitting, and attachment.

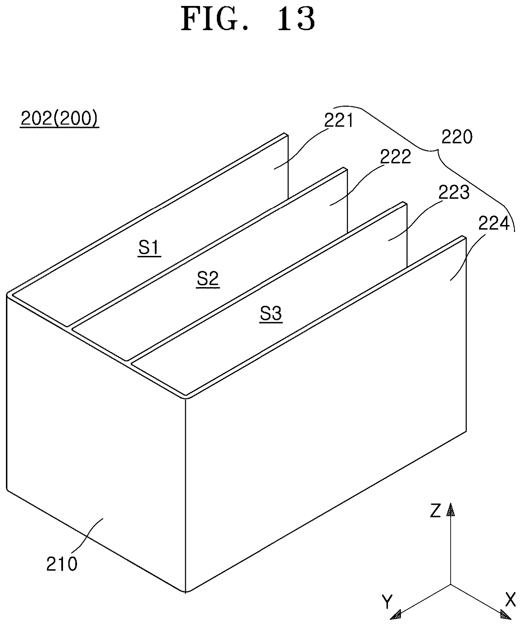

FIG. 13 is a view illustrating a holder.

A battery pack 1000 (including, for example, the battery pack 1000 described in FIGS. 1 to 12) includes a secondary battery 100 (including, for example, the secondary battery 100 described in FIGS. 1 to 12) and a holder 202.

The holder 202 (including, for example, the holder 200 described in FIGS. 1 to 12) includes one or more short sides 210 extending in the first direction, and a plurality of long sides 220 connected to the short side 210 and extending in the second direction, and defines one or more accommodating spaces (e.g., S1, S2, and S3) in which the secondary battery 100 is provided through the short side 210 and the long sides 220.

For example, the holder 202 includes one or more short sides 210.

The short side 210 extends in the first direction.

For example, the holder 202 includes three or more long sides 220. Although FIG. 13 illustrates that the holder 202 includes four long sides 221, 222, 223 and 224, the holder 202 is not limited thereto.

The long side 220 extends in the second direction. One side of the long side 220 is connected to the short side 210. For example, when the holder 202 includes a plurality of long sides 220, each of the plurality of long sides 220 is spaced apart from each other or one another and one side thereof is connected to the short side 210.

For example, a plurality of long sides 220 are spaced apart from each other or one another. The plurality of long sides 220 may be positioned spaced apart from each other or one another at substantially equal intervals. An interval between the plurality of long sides 220 is substantially the same as or similar to the length D of the accommodating space (e.g., S1, S2, or S3).

For example, the plurality of long sides 220 includes a first long side 221, a second long side 222, a third long side 223, and a fourth long side 224.

For example, a portion of the long side 220 (e.g., the first long side 221) is connected to an end portion of one side of the short side 210. For example, another portion of the long side 220 (e.g., the fourth long side 224) is connected to an end portion of the other side of the short side 210. For example, other portions of the long side 220 (e.g., the second long side 222 and the third long side 223) are connected to a surface of the short side 210. Other portions of the long side 220 may be placed between the other portions of the long side 220 and the another portion of the long side 220.

Advantageously, the holder 202 may define a plurality of accommodating spaces (e.g., S1, S2, and S3) in which openings are formed in the same direction.

For example, the holder 202 includes a first accommodating space S1 and a second accommodating space S2.

For example, the first accommodating space S1 may be defined by the first long side 221 and the second long side 222. For example, the first long side 221 and the second long side 222 define at least a portion of a side surface of the first accommodating space S1.

For example, the second accommodating space S2 may be defined by the second long side 222 and the third long side 223. For example, the second long side 222 and the third long side 223 define at least a portion of a side surface of the second accommodating space S2.

For example, the first accommodating space S1 and the second accommodating space S2 are disposed adjacent to each other with the second long side 222 disposed therebetween. For example, the short side 210 defining the first accommodating space S1 may be substantially the same as the short side 210 defining the second accommodating space S2. For example, the short side 210 extends in the first direction and defines a portion of each of the first accommodating space S1 and the second accommodating space S2.

When the holder 202 includes a third accommodating space S3 located adjacent to the second accommodating space S2, the first to the third accommodating spaces S1 to S3 may include one connected short side 210.

Advantageously, the holder 202 includes a plurality of accommodating spaces (e.g., S1, S2, and S3) in which openings are formed on one side thereof. The holder 202 allows a plurality of secondary batteries 100 to be accommodated in one direction within the accommodating space (e.g., S1, S2, or S3). Accordingly, the holder 202 allows a cell-to-cell process to proceed with relative ease.

As described in FIGS. 10 to 12, the holder 200 may be formed by coupling a plurality of holders 202.

For example, the plurality of holders 202 may be coupled by the contact of outer surfaces between the long sides 220 located at the outermost ends. For example, the plurality of holders 202 may be coupled by the contact of inner surfaces between the long sides 220 located at the outermost ends.

For example, each of the plurality of holders 202 may include two accommodating spaces. The plurality of holders 202 may be arranged and coupled such that the openings of the accommodating spaces are formed in the same direction. The plurality of holders 202 may be arranged and coupled such that the openings of the accommodating spaces are formed in different directions.

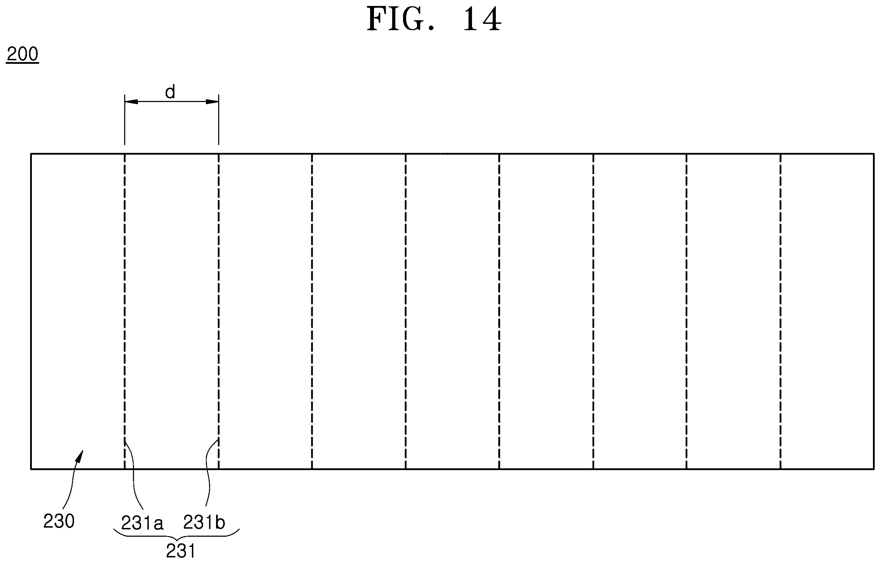

FIG. 14 is a view illustrating a plate.

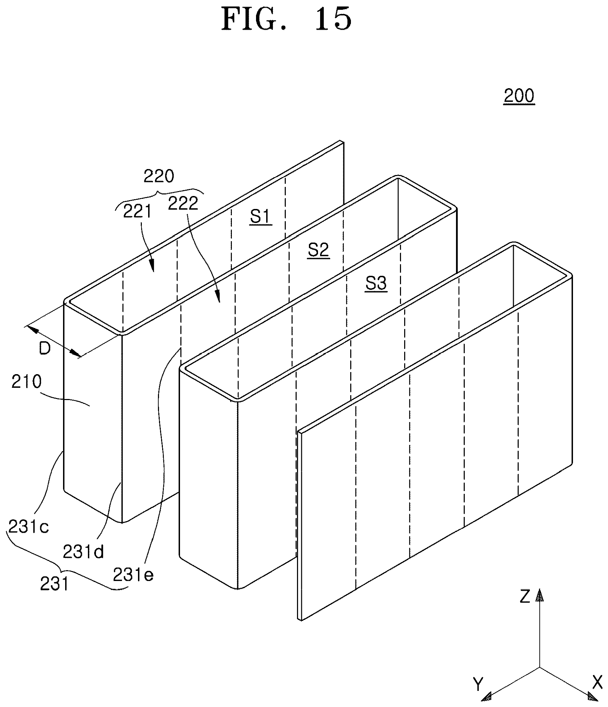

FIG. 15 is a view illustrating a holder formed by the plate described in FIG. 14.

A battery pack 1000 (including, for example, the battery pack 1000 described in FIGS. 1 to 13) includes a secondary battery 100 (including, for example, the secondary battery 100 described in FIGS. 1 to 13) and a holder 200 (including, for example, the holder 200 described in FIGS. 1 to 13).

In FIGS. 14 and 15, at least a portion of the holder 200 is illustrated. FIG. 14 shows the holder 200 in an unfolded state, and FIG. 15 shows a portion of the holder 200 in a folded state.

For example, the holder 200 includes a plate 230 with a plurality of folding lines 231 spaced part at predetermined intervals d, the plate 230 is folded along two or more of plurality of folding lines 231 to form at least a portion of the holder 200.

The plate 230 includes a short side 210 and a long side 220. The plate 230 is formed with a certain thickness or more. The plate 230 may be formed in a flat plate geometry. For example, as illustrated in FIG. 14, the plate 230 may be formed in a rectangular plate geometry.

The folding line 231 is formed on the plate 230. For example, the folding line 231 may have a V-shaped groove formed on one side of the plate 230. However, the folding line 231 includes any geometry that allows the plate 230 to be folded at a desired position.

Two or more folding lines 231 are formed on the plate 230. The two or more folding lines 231 are spaced apart at predetermined intervals d. For example, the plate 230 includes folding lines 231 spaced apart at substantially equal intervals (e.g., the predetermined interval d) from one side to the other side of the plate 230. The predetermined interval d corresponds to the shortest distance between two adjacent folding lines (e.g., 231a and 231b). For example, the predetermined interval d corresponds to the length D of the accommodating space (e.g., S1, S2, or S3).

The two or more folding lines 231 are formed parallel to each other or one another. For example, the two or more folding lines 231 may be parallel to the height direction (Z axis) of the battery pack 1000.

The folding line 231 allows the plate 230 to be folded. For example, as the plate 230 is folded along the folding line 231, an angle at which the plate 230 extends changes. For example, the plate 230 is folded along the folding line 231 such that the angle at which the plate 230 extends changes by 90° (including a range of ± 5°).

For example, as illustrated in FIG. 15, the plate 230 may be folded along the folding line 231 to form the holder 200 described in FIGS. 1 to 13. For example, the plate 230 may be folded along the folding line 231 to form the short side 210 and the long side 220. The plate 230 may be folded along the folding line 231 to form the accommodating space (e.g., S1, S2, or S3).

For example, the plate 230 includes a first folding line 231c, a second folding line 231d, and a third folding line 231e, which are located adjacent to each other or one another. An interval between the first folding line 231c and the second folding line 231d corresponds to predetermined interval d. An interval between the second folding line 231d and the third folding line 231e corresponds to predetermined interval d.

For example, the plate 230 may be folded along the first folding line 231c. The plate 230 forms a first long side 221 extending in the second direction. The plate 230 may be folded along the first folding line 231c, and the extension direction thereof may be changed in the first direction. The first folding line 231c may be the folding line 231 located at the fifth position from one side of the plate 230. The width of the first long side 221 may correspond to 5d.

For example, the plate 230 may be folded along the second folding line 231d. The plate 230 forms a short side 210 extending in the first direction. The plate 230 may be folded along the second folding line 231d and the extension direction thereof may be changed to extend in the second direction. The second folding line 231d may correspond to the folding line 231 located at the sixth position from one side of the plate 230. The length of the short side 210 may correspond to d.

For example, the plate 230 may not be folded along the third folding line 231e. The plate 230 may not be folded for a width of 5d corresponding to the width of the first long side 221 to form the second long side 222 extending in the second direction.

The plate 230 may be formed into the holder 200 including the short side 210 and the long side 220 by folding along the folding line 231.

Advantageously, the holder 200 may be transformed into various forms depending on the specifications of the battery pack 1000. The holder 200 may be transformed into various forms and applied depending on the specifications of the secondary battery 100.

The holder 200 including the folding line 231 may be applied to the unit holder 201 or 202 described in FIGS. 10 to 13. For example, the unit holder 201 or 202 includes the folding line 231. The unit holder 201 or 202 may be folded along the folding line 231 such that the width and/or length of the short side 210 and/or the long side 220 may be adjusted.

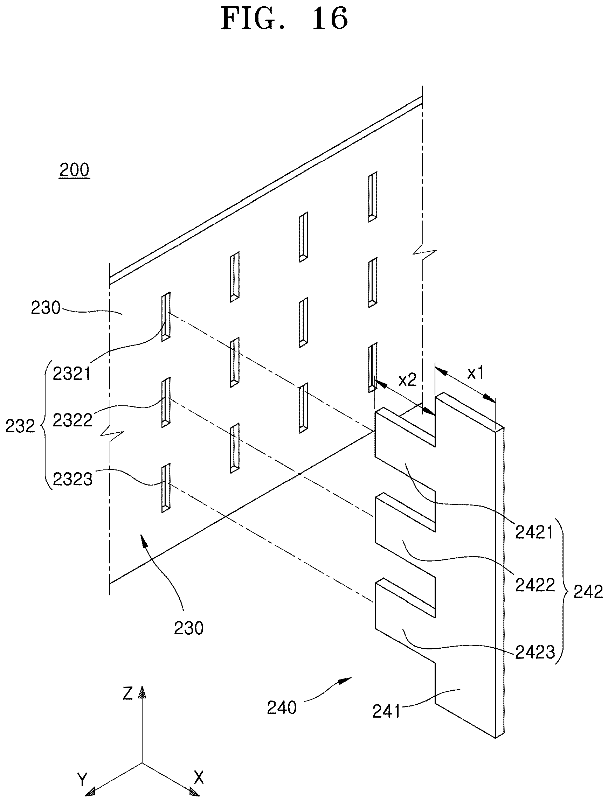

FIG. 16 is a view illustrating a plate and a coupling member.

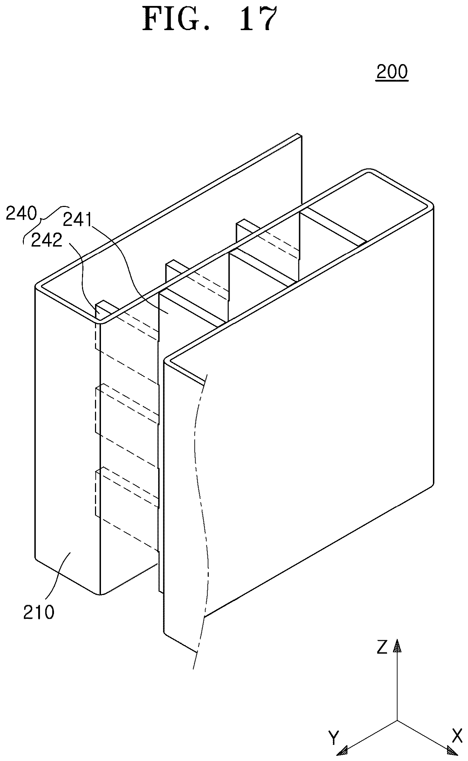

FIG. 17 is a view illustrating a holder formed by coupling the coupling member and the plate described in FIG. 16.

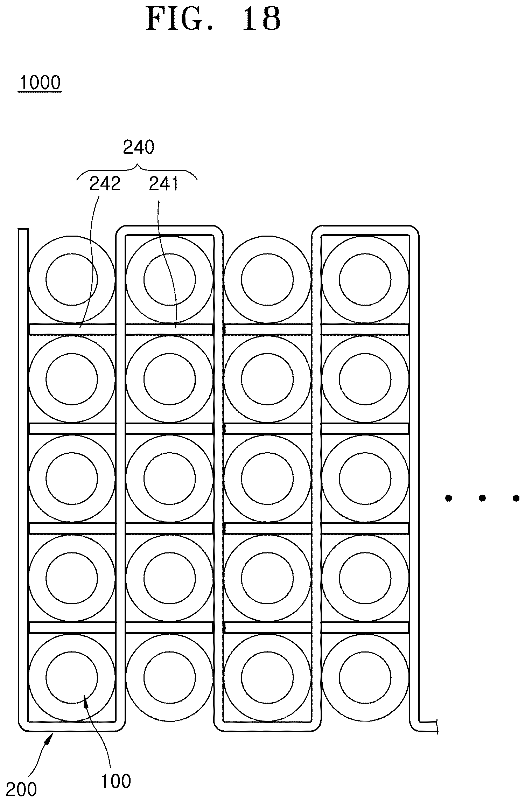

FIG. 18 is a view illustrating a holder formed by coupling the coupling member and the plate described in FIG. 16.

A battery pack 1000 (including, for example, the battery pack 1000 described in FIGS. 1 to 15) includes a secondary battery 100 (including, for example, the secondary battery 100 described in FIGS. 1 to 15) and a holder 200 (including, for example, the holder 200 described in FIGS. 1 to 15).

For example, the holder 200 includes a plurality of holes 232 formed in the long side 220 and a coupling member 240 coupled to the holes 232 and extending in the first direction.

The hole 232 passes through the long side 220.

For example, the plurality of holes 232 are formed in the long side 220. For example, in the second direction, the plurality of holes 232 may be formed at intervals equal to or greater than the diameter r1 of the cylindrical secondary battery 100 (see FIG. 3).

The coupling member 240 extends in the first direction. For example, unlike as illustrated in FIG. 16, the coupling member 240 may have a rectangular plate geometry that is formed to extend in the first direction.

The coupling member 240 is fitted into the hole 232. The coupling member 240 may be coupled to the holder 200 while being coupled to the hole 232.

As illustrated in FIGS. 17 and 18, the coupling member 240 is fitted into the hole 232 and passes through the long side 220. The coupling member 240 may partition the interior of each of the accommodating spaces (e.g., S1, S2, and S3). For example, the coupling member 240 passes through a space between at least some of the two or more secondary batteries 100 provided in the accommodating space (e.g., S1, S2, or S3). One or more secondary batteries 100 may be provided within the partitioned accommodating space.

The holder 200 may effectively prevent insulation between the secondary batteries 100 and prevent a short circuit from occurring in the secondary batteries 100. The stability of the battery pack 1000 may be improved.

The holder 200 may be separated from the coupling member 240. When the holder 200 supports a prismatic secondary battery 100, the holder 200 may be separated from the coupling member 240 and applied to the battery pack 1000. When the holder 200 supports a cylindrical secondary battery 100, the holder 200 may be coupled to the coupling member 240 and applied to the battery pack 1000.

For example, the coupling member 240 includes a catch portion 241 and a passing through portion 242 to be more firmly fixed to the holder 200.

For example, the catch portion 241 allows the coupling member 240 to be caught on the hole 232. For example, a height of the catch portion 241 is formed so that it cannot pass through the hole 232. For example, the catch portion 241 extends in the first direction.

For example, the passing through portion 242 extends from a portion of the catch portion 241. For example, the passing through portion 242 extends in the same direction as the catch portion 241. For example, the passing through portion 242 extends in the first direction.

For example, the passing through portion 242 passes through the hole 232. For example, a height of the passing through portion 242 passes through the hole 232. In the vertical direction (Z axis) of the battery pack 1000, the height of the catch portion 241 is greater than the height of the passing through portion 242.

The passing through portion 242 may be positioned in a different accommodating space from the catch portion 241 by passing through the hole 232.

For example, a length x1 of the catch portion 241 may be less than or equal to a length x2 of the passing through portion 242. For example, the length x2 of the passing through portion 242 may be substantially equal to the sum of the length x1 of the catch portion 241 and a thickness of the long side 220. However, the lengths x1 and x2 of the catch portion 241 and/or the passing through portion 242 are not limited thereto.

For example, the length x1 of the catch portion 241 may be less than or equal to the length D of the accommodating space. For example, the catch portion 241 may be substantially equal to the length D of the accommodating space to partition the accommodating space.

For example, the length x2 of the passing through portion 242 is greater than the length of the accommodating space and less than the length in the longitudinal direction (X-axis) of the battery pack 1000. For example, as illustrated in FIGS. 16 to 18, the passing through portion 242 may have a length similar to the length D of the accommodating space. The passing through portion 242 passes through one long side 220. The passing through portion 242 may partition one accommodating space. For example, unlike as illustrated, the passing through portion 242 may have a length similar to a length of the battery pack 1000. The passing through portion 242 passes through a plurality of long sides 220. The passing through portion 242 may partition a plurality of accommodating space.

As illustrated in FIG. 17, the coupling member 240 is coupled to the holder 200. As illustrated in FIG. 18, the coupling member 240 may partition the accommodating space formed in the holder 200. The holder 200 may prevent contact between the secondary batteries 100 and enhance the safety of the battery pack 1000.

For example, the hole 232 includes a plurality of hole 232 formed in a height direction of the holder 200, and the coupling member 240 includes a catch portion 241 extending in the vertical direction of the holder 200 so that the coupling member 240 is caught on the hole 232 and a plurality of passing through portions 242 extending in the first direction from the catch portion 241 and passing through the plurality of holes 232.

For example, the plurality of holes 232 may be formed in the long side 220 in the vertical direction of the holder 200. For example, the hole 232 may include a first hole 2321, a second hole 2322, and a third hole 2323, which are located along the same vertical line. The first hole 2321 may be located closer to an upper side of the holder 200. The third hole 2323 may be located closer to a lower side of the holder 200. The second hole 2322 may be located between the first hole 2321 and the third hole 2323.

For example, the coupling member 240 may include one or more passing through portions 242 extending from one catch portion 241. For example, the passing through portion 242 may include a first passing through portion 2421 that passes through the first hole 2321, a second passing through portion 2422 that passes through the second hole 2322, and a third passing through portion 2423 that passes through the third hole 2323. The first passing through portion 2421, the second passing through portion 2422, and the third passing through portion 2423 may be formed in the vertical direction of the holder 200 along the same vertical line. Accordingly, the coupling member 240 may be firmly fixed to the holder 200. However, the structure of the coupling member 240 is not limited thereto.

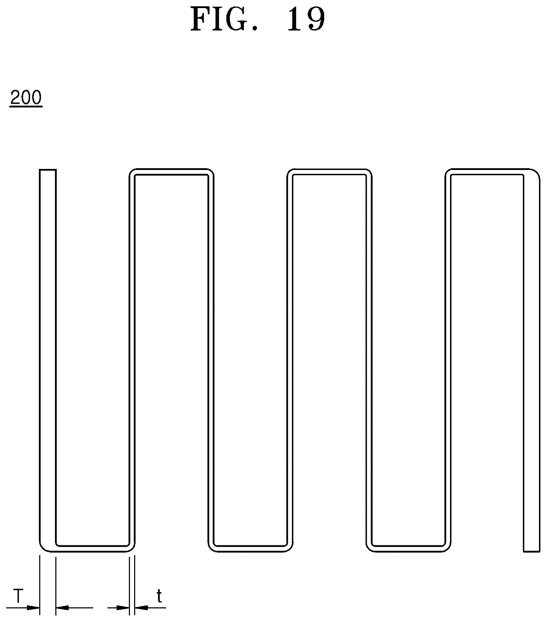

FIG. 19 is a view illustrating a holder.

A battery pack 1000 (including, for example, the battery pack 1000 described in FIGS. 1 to 18) includes a secondary battery 100 (including, for example, the secondary battery 100 described in FIGS. 1 to 18) and a holder 200 (including, for example, the holder 200 described in FIGS. 1 to 18).

For example, the long sides 220 located at the outermost ends of the holder 200 are thicker than a long side located in the interior of the holder 200.

In FIG. 19, T represents a thickness of the long side located at the outermost end of the holder 200. In FIG. 19, t represents a thickness of the long side located inside the holder 200. That is, t is a thickness of a long side that is not located at the outermost end of the holder 200. The long side located at the outermost end represents an area of the long side 220 that is in contact with the housing 1100.

The secondary battery 100 may expand and contract repeatedly as charging and discharging are repeated. The expansion of the secondary battery 100 may occur uniformly in the longitudinal direction (X-axis) and the lateral direction (Y-axis) of the battery pack 1000. However, the expansion of the secondary battery 100 may occur in either the longitudinal direction (X-axis) or the lateral direction (Y-axis) of the battery pack 1000. For example, the expansion of the secondary battery 100 may occur most significantly in the longitudinal direction (X-axis) of the battery pack 1000.

The holder 200 may mitigate the expansion of the secondary battery 100, and the long side located at the outermost end may be relatively thick to suppress the expansion of the secondary battery 100. The holder 200 can assist the housing 1100 suppressing the expansion of the secondary battery 100. The holder 200 can improve the safety of the battery pack 1000.

The battery pack 1000 includes a plurality of secondary batteries 100 and a holder 200 that supports the plurality of secondary batteries 100. The holder 200 connects the plurality of secondary batteries 100 so that the plurality of secondary batteries 100 may be assembled into the battery pack 1000. The holder 200 can be universally applied to various types of the secondary battery 100.

According to the present disclosure, a battery pack may include a holder which is universally applicable to various geometries of secondary batteries.

According to the present disclosure, a battery pack does not require a separate thermal insulation sheet.

According to the present disclosure, a battery pack has improved stability.

## Claims

1. A battery pack (1000) comprising:
a plurality of secondary batteries (100);
a housing (1100) accommodating the plurality of secondary batteries (100); and
a holder (200, 202) disposed within the housing (1100) and supports the plurality of secondary batteries (100),
wherein the holder (200, 202) includes one or more short sides (210) extending in a first direction and a plurality of long sides (220, 220a, 220b) connected to the short sides (210) and extending in a second direction, and
wherein the holder (200, 202) defines one or more accommodating spaces where the plurality of secondary batteries (100) are provided through the short sides (210) and the long sides (220, 220a, 220b).

2. The battery pack (1000) of claim 1, wherein each of the long sides (220, 220a, 220b) includes a first long side (221, 221a, 221b), a second long side (222, 222a, 222b), and a third long side (223), all of which are spaced apart from each other or one another and disposed adjacent to each other or one another, and wherein the accommodating space includes a first accommodating space (S1) including the first long side (221, 221a, 221b) and the second long side (222, 222a, 222b) and a second accommodating space (S2) which is disposed adjacent to the first accommodating space (S1) and includes the second long side (222, 222a, 222b) and the third long side (223).

3. The battery pack (1000) of claim 2, wherein the short sides (210) include a first short side (210a, 211) and a second short side (210b, 212), wherein the first accommodating space (S1) includes the first short side (210a, 211) that is located on one side of the holder (200, 202), and wherein the second accommodating space (S2) includes the second short side (210b, 212) that is located on the other side of the holder (200, 202).

4. The battery pack (1000) of claim 2, wherein the short sides (210) extend in the first direction and define portions of the first accommodating space (S1) and the second accommodating space (S2).

5. The battery pack (1000) of claim 1, wherein the secondary battery (100) includes an electrode assembly and a case (110) accommodating the electrode assembly, and wherein a height of the accommodating space is equal to or greater than a height of the case (110).

6. The battery pack (1000) of claim 1, wherein the secondary battery (100) includes an electrode assembly and a cylindrical case (110) accommodating the electrode assembly, and wherein a length of the accommodating space is equal to or greater than a diameter of the cylindrical case (110).

7. The battery pack (1000) of claim 1, wherein the secondary battery (100) includes an electrode assembly and a prismatic case (110) accommodating the electrode assembly, and wherein a length of the accommodating space is equal to or greater than a length of one side surface of the prismatic case (110).

8. The battery pack (1000) of claim 1, wherein the holder (200, 202) includes one or more unit holders (201, 201a, 201b, 202b) that define one accommodating space, and the unit holder (201, 201a, 201b, 202b) is defined by one short side (210) and two long sides (220, 220a, 220b) respectively connected to one side and an other side of the short side (210), and
the holder (200, 202) is formed by coupling a plurality of the unit holders (201, 201a, 201b, 202b).

9. The battery pack (1000) of claim 8, wherein the holder (200, 202) includes a plurality of the unit holders (201, 201a, 201b, 202b) including a first unit holder (201a) and a second unit holder (201b, 202b) located adjacent to each other, and wherein a long side (220, 220a, 220b) included in the first unit holder (201a) is in surface contact with one of an outer side and an inner side of a long side (220, 220a, 220b) included in the second unit holder (201b, 202b).

10. The battery pack (1000) of claim 1, wherein the holder (200, 202) includes a plate (230) with a plurality of folding lines (231) spaced at predetermined intervals, and wherein the plate (230) is configured to be folded along two or more of the plurality of folding lines (231) to form at least a portion of the holder (200, 202), and
the predetermined interval corresponds to a length of the accommodating space.

11. The battery pack (1000) of claim 1, wherein the holder (200, 202) further includes:
a plurality of holes (232) on the long side (220, 220a, 220b); and
a coupling member (240) coupled to the hole (232) and extending in the first direction.

12. The battery pack (1000) of claim 11, wherein the coupling member (240) includes:
a catch portion (241) allowing the coupling member (240) to be caught on the hole (232); and
a passing through portion (242) extending from a portion of the catch portion (241) and passes through the hole (232).

13. The battery pack (1000) of claim 11, wherein the hole (232) includes a plurality of holes (232) formed in a vertical direction of the holder (200, 202), and wherein the coupling member (240) includes:
a catch portion (241) extending in the vertical direction of the holder (200, 202) so that the coupling member (240) is caught on the hole (232); and
a plurality of passing through portions (242) extending in the first direction from the catch portion (241) and passing through the plurality of holes (232).

14. The battery pack (1000) of any one of the preceding claims, wherein the holder (200, 202) further includes a thermal insulating material, and wherein the thermal insulating material includes mica, kaolin, talc, diatomaceous earth, bentonite, silica, gangue, polyimide, and polyethylene terephthalate, or a mixture thereof.

15. The battery pack (1000) of any one of the preceding claims, wherein the long sides (220, 220a, 220b) located at the outermost sides of the holder (200, 202) are thicker than the long side (220, 220a, 220b) located within the holder (200, 202).
